# EUROPEAN PATENT SPECIFICATION

(11) **EP 1 203 278 B1**
(45) Date of publication and mention of the grant of the patent: **08.02.2012**
(21) Application number: 00953292.0
(22) Date of filing: 11.08.2000
(51) Int. Cl.: G06F 21/00

(54) **ENFORCING RESTRICTIONS ON THE USE OF STORED DATA**
ERZWINGUNG VON BESCHRÄNKUNGEN AUF BENUTZUNG VON GESPEICHERTEN DATEN
MISE EN OEUVRE DE RESTRICTION DE L'UTILISATION DE DONNEES MEMORISEES

(30) Priority: 13.08.1999 EP 99306415; 25.09.1999 GB 9922669
(43) Date of publication of application: 08.05.2002
(73) Proprietor: Hewlett-Packard Development Company, L.P., Houston, TX 77070 (US)
(72) Inventor: PEARSON, Siani, Lynne, Westbury-on-Trym, Bristol BS9 3PZ (GB); PROUDLER, Graeme, John, Stoke Gifford, Bristol BS34 8XQ (GB)
(74) Representative: Lawman, Matthew John Mitchell
(86) International application number: PCT/GB2000/003095
(87) International publication number: WO 2001/013198

(56) References cited:
- EP-A- 0 421 409
- US-A- 5 473 692
- US-A- 5 680 547
- US-A- 5 933 498
- SCHNECK P B: "PERSISTENT ACCESS CONTROL TO PREVENT PIRACY OF DIGITAL INFORMATION" PROCEEDINGS OF THE IEEE,IEEE. NEW YORK,US, vol. 87, no. 7, July 1999 (1999-07), pages 1239-1250, XP000955318 ISSN: 0018-9219 cited in the application

## Description

This invention relates to computer platforms and their method of operation, and is more particularly concerned with controlling and/or metering the use of data on computer platforms, particularly computer platforms that are available to a number of mobile users.

In this document, 'data' signifies anything that can be formatted digitally, such as images, software and streaming media.

In the future, computer systems will be able to achieve a more secure booting, together with integrity checks on other code to ensure that viruses or other unauthorised modifications have not been made to the operating systems and mounted software. In addition, a new generation of tamper-proof devices are already appearing or will soon appear on the market and include both external or portable components (such as smart cards) and internal components (embedded processors, semi-embedded processors or co-processors with security functionality, i.e. including motherboard, USB and ISA implementations). These tamper-proof components will be used to check that the hardware of the system has not been tampered with, and to provide a more reliable form of machine identity than currently available (for example, the machine's Ethernet name).

The existence of such tamper-proof components and the possibility of secure booting does not by itself remove all security problems related to computing platform use. In particular, the counteraction of piracy, and the licencing and metering of software use in a manner that is acceptable to software developers and end-users, still provide major problems.

Software licensing is subject to hacking and piracy, and all the current software licensing methods used have problems associated with them. Software implementations of licensing (such as "licence management systems") are flexible, but not especially secure or fast. In particular, they suffer from a lack of security (for example, being subject to a generic "hack") and difficulty in genuine replacement of software. Conversely, hardware implementations ("dongles") are faster and generally more secure than software implementations, but inflexible. They are tailored only for a particular piece of software and are inconvenient for end-users.

A common technique in the field of licence protection is to use a software wrapper to encode information relating to licensing and other protection measures. Data wrappers, or cryptographic containers, are commonly used within software-only and hybrid methods of data protection, but are not at present a very secure method of protection because they are vulnerable to alteration and removal, even if an integrity check is contained within the wrapper. In particular, the data wrapper is a prime target for hackers since it may contain a profile defmed by the data's developer that governs the way in which the data may be executed, or other sensitive information which should not be altered. Authentication, encryption and integrity checks may be used to protect the wrapper from being modified en route to its being downloaded and stored onto the client platform. However, there is a major risk that it could be modified or deleted by a malicious entity, or by accident, once the data and associated wrapper are stored (for example, on a hard disk) within the client platform. Once modified, the data could then be used on the client platform in a way that is outside the scope of the profile defined in the original, unmodified wrapper.

One system to address such difficulties has been proposed in "Persistent Access Control to Prevent Piracy of Digital Information" Paul B. Schneck, Proceedings of the IEEE, Volume 87, No. 7, July 1999, PP1239-1250 and associated patent US5933498, which use access control software to check licensing information before access to data. That system, however, only considered the case where a generic licence was operable for all users. Access control mechanisms cannot provide a complete solution to this problem because they can be bypassed and, moreover, they focus on controls specified by the user's administrator rather than the developer of the data. There are many situations where a platform is shared by users who have different software permissions. Existing systems do not satisfactorily address this issue, which is likely to become increasingly significant.

### Summary of the Invention

Accordingly, the present invention provides a computer system adapted to restrict operations on particular data, comprising:
a device comprising a first, portable, trusted module containing a user identity, wherein a trusted module is a component adapted to behave in an expected manner and resistant to unauthorized external modification;
a computer platform comprising a second trusted module, means for interfacing with the device, and a secure operator;
a data protector provided on a host that is one of the computer platform and the device, and adapted:
   to check the integrity of data to be installed on the host, the data comprising said particular data and an associated access profile specifying license permissions of users with respect to the particular data;
   to cause the trusted module of the host to store integrity check data in respect of the data being installed; and
   in response to a request to operate on the data, to check the data integrity by reference to the stored integrity check data;
the secure operator and the access profile being arranged to cooperate, in response to a request from the operating system of the computer platform concerning an intended operation on said particular data, to determine whether the intended operation on the particular data is licensed for the user identity contained in the portable trusted module and prevent the intended operation if a license is required and not present.

Preferably, the platform trusted module and the portable trusted module are adapted for mutual authentication. The device comprising the portable trusted module is typically a smart card.

Preferably some or all of the functionality of the secure operator is within the platform trusted module and the data protector is within the host's trusted module.

In one embodiment, the computer platform is adapted at boot to check the integrity of operation protection code comprising the secure operator and the data protector. The computer platform may perform this integrity check by reading and hashing the operation protection code to produce a first hash, reading and decrypting a stored signed version of a secure operation protection code hash using a public key certificate of a third party stored in the platform trusted module to produce a second hash, and comparing the first hash and the second hash.

Preferably, the portable trusted module contains a user access license specifying access rights to the particular data, whereby unless prevented by the access profile, the secure operator is adapted to check the user access license to determine whether a requested operation is licensed for the user identity contained in the portable trusted module. Thus, the developer can issue (user) licences on smart cards, which would then be sent out to end-users after registration, or the licence can be downloaded electronically either to the smart card or to the platform trusted module. Data can be downloaded at the same time, or transferred separately, possibly by non-electronic means such as CD-ROM. Regarding checking a licence stored in a smart card (portable trusted module), the secure operator either retrieves the licence into a store held on the platform trusted module that it can consult in the future, or else it consults the smart card each time to find out the details of the licence. This user licence may be updated as a result of the data access: for instance, if an operation permission is qualified by being for a fixed number of uses.

The present invention differs from Schneck's system in that it uses a client system where access checks are made according to the user identity (derived from a removable TC such as a smart card), but the checks themselves are made using the access control software mounted on the client PC or other client platform. Furthermore, the following are possible: (a) a licence can be associated with each end-user, instead of or as well as with the PC TC, which is necessary for certain types of access control; (b) it is not essential (although it is preferable) that the data is encrypted (c); to prevent modification of the licence (cf. access profile), a digest is stored in the TC upon loading and consulted before data access; (d) the access control code is protected at BIS (BOOT Integrity Service) and preferably runs within the TC, or else, there is a dedicated communications path between the code and TC that is inaccessible to other parts of the computer platform; (e) logs are made within the TC; and (f) the licence can have a more proactive role.

The motivation for this particular invention is that more complex models of data usage dictate greater flexibility, which can only be brought about effectively by using multiple TCs in the client A particularly preferred embodiment of the present invention uses a trusted module (TC) of a computer platform (that is possibly shared by several users) in conjunction with software, preferably running within the TC, that ensures that restriction on the usage by each individual end-user of stored data specified by the developer must be adhered to, that the different end users can have different access profiles and in addition that data cannot be used on the platform if the data or associated wrapper or licence has been modified since the initial download onto the platform. The host CPU requests a policy check before acting upon data, by sending the name of the target data plus the intended operation to a TC. The TC checks the ID of the user that is logged in (via the ID of the portable TC), and the restrictions corresponding to this current end-user that are associated with the target data. Those restrictions could be on who may access the data, on the number of times the data can be used, the operations which may not be carried out, and so on, or the restrictions might have been deliberately loaded as 'NULL'. The TC checks the proposed usage with the restrictions. If no appropriate permission is found, the TC checks for a licence on the portable TC (advantageously a smart card) and for valid permission for the data usage within this. The TC then replies to the CPU with or without the access permission, as appropriate. The CPU is not able to carry certain operations on target data such as copy, edit, add section, replace section, execute, delete, print, open, scan, rename, move location, send to or read without obtaining the appropriate permission from the TC in such manner. Preferably, the integrity of the target data and restrictions is checked before the operation is carried out to ensure that they have not been illegally or accidentally modified on the platform. Alternatively, the checking can be carried out on the portable TC itself.

In another embodiment it is the access profile, rather than the secure operator, that takes the role of controlling the operating system's ability to execute the restricted data.

A significant component of the system is the access profile associated with each piece of application software or data, which specifies the data to be protected and specifies the type of operations that the developer wishes to be carried out upon that particular software or data. Optionally, the access profile specifies any other particular information to be checked for in carrying out certain operations, such as a particular TC ID or a secret which is to be checked for in the TC or current signed-on smart card. Another possibility is for the access profile to run, preferably together with the data, within a TC or smart card (suitably segmented). The access profile can be thought of as a form of licence or cryptographic container associated with the data.

### Description of the Figures

- Figure 1: is a diagram that illustrates a system capable of implementing embodiments of the present invention;
- Figure 2: is a diagram which illustrates a motherboard including a trusted device arranged to communicate with a smart card via a smart card reader and with a group of modules;
- Figure 3: is a diagram that illustrates the trusted device in more detail;
- Figure 4: is a flow diagram which illustrates the steps involved in acquiring an integrity metric of the computing apparatus;
- Figure 5: is a flow diagram which illustrates the steps involved in establishing communications between a trusted computing platform and a remote platform including the trusted platform verifying its integrity;
- Figure 6: is a diagram that illustrates the operational parts of a user smart card for use in accordance with embodiments of the present invention;
- Figure 7: is a flow diagram which illustrates the process of mutually authenticating a smart card and a host platform;
- Figure 8: is a schematic block diagram of a trusted module in the system of Figure 15;
- Figures 9 to 12: show parts of the system of Figure 15 to illustrate various communication methods employed therein;
- Figure 13: illustrates the format of a protocol data unit used in the system of Figure 15;
- Figure 14: shows a modification to the system of Figure 15, which will be used to describe a specific embodiment of the present invention;
- Figure 15: is a schematic block diagram of a host computer system which is the subject of another patent application (International Patent Application No. PCT/GB00/00504, filed on 15 February 2000);
- Figure 16: is a diagram of the logical components of a trusted module in the system of Figure 14;
- Figure 17: illustrates the structure of protected software or data in the system of Figure 14;
- Figure 18: is a flow chart illustrating installing or upgrading of software or other data on the system of Figure 14;
- Figure 19: is a diagram illustrating the relationship between a portable trusted device and a trusted platform in a system according to embodiments of the invention;
- Figure 20: is a flow chart illustrating the use of protected data or software in the system of Figure 14 so as to enforce licensing restrictions;
- Figure 21: is a flow chart illustrating installation and use of software or other data on the system of Figure 14 in a further embodiment of the invention.

### Specific Embodiments of the Invention

Preferred embodiments of the invention will now be described, by way of example.

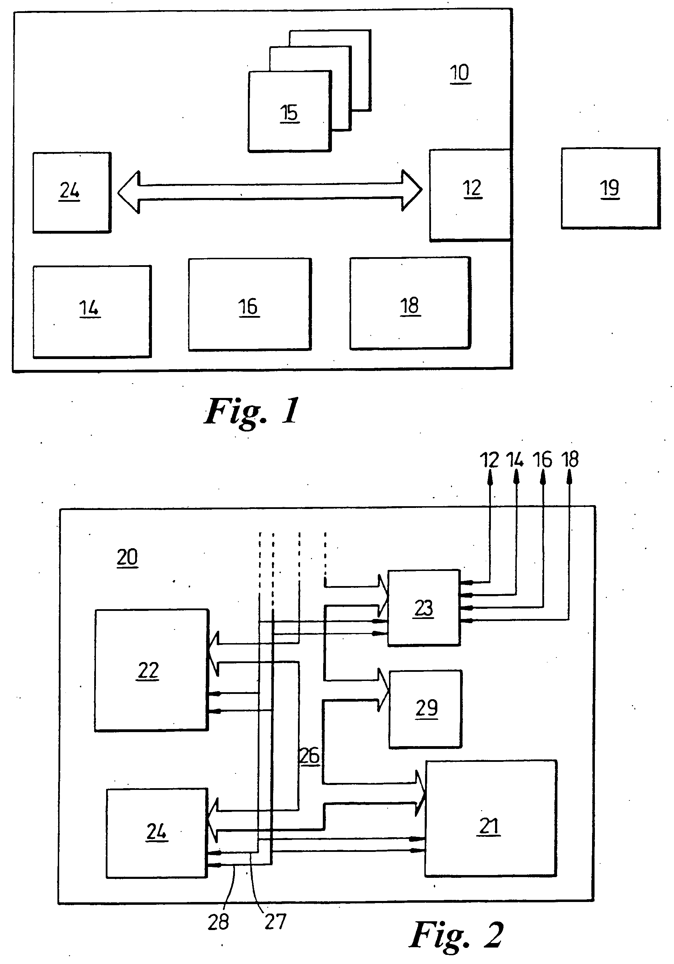

Before describing the embodiment of the present invention, a computing platform incorporating a trusted device and suitable for use in embodiments of the invention will be described with reference to Figures 1 to 7. Also described as suitable for use in embodiments of the invention is a trusted token device personal to a user of the computer platform - in preferred examples, this token device is a smart card.

What is described is the incorporation into a computing platform of a physical trusted device or module whose function is to bind the identity of the platform to reliably measured data that provides an integrity metric of the platform, thereby forming a "trusted platform". The identity and the integrity metric are compared with expected values provided by a trusted party (TP) that is prepared to vouch for the trustworthiness of the platform. If there is a match, the implication is that at least part of the platform is operating correctly, depending on the scope of the integrity metric.

In this specification, the term "trusted" when used in relation to a physical or logical component, is used to mean that the physical or logical component always behaves in an expected manner. The behavior of that component is predictable and known. Trusted components have a high degree of resistance to unauthorized modification.

In this specification, the term "computing platform" (or "computer platform") is used to refer to at least one data processor and at least one data storage means, usually but not essentially with associated communications facilities e.g. a plurality of drivers, associated applications and data files, and which may be capable of interacting with external entities e.g. a user or another computer platform, for example by means of connection to the internet, connection to an external network, or by having an input port capable of receiving data stored on a data storage medium, e.g. a CD ROM, floppy disk, ribbon tape or the like.

A user verifies the correct operation of the platform before exchanging other data with the platform. A user does this by requesting the trusted device to provide its identity and an integrity metric. (Optionally the trusted device will refuse to provide evidence of identity if it itself was unable to verify correct operation of the platform.) The user receives the proof of identity and the integrity metric, and compares them against values which it believes to be true. Those proper values are provided by the TP or another entity that is trusted by the user. If data reported by the trusted device is the same as that provided by the TP, the user trusts the platform. This is because the user trusts the entity. The entity trusts the platform because it has previously validated the identity and determined the proper integrity metric of the platform.

A user of a computing entity may, for example, establish a level of trust with the computer entity by use of such a trusted token device. The trusted token device is a personal and portable device having a data processing capability and in which the user has a high level of confidence. It may also be used by the trusted platform to identify the user. The trusted token device may perform the functions of:
- verifying a correct operation of a computing platform in a manner which is readily apparent to the user, for example by audio or visual display;
- challenging a monitoring component to provide evidence of a correct operation of a computer platform with which the monitoring component is associated; and
- establishing a level of interaction of the token device with a computing platform, depending on whether a monitoring component has provided satisfactory evidence of a correct operation of the computing entity, and withholding specific interactions with the computer entity if such evidence of correct operation is not received by the token device.

Once a user has established trusted operation of the platform, he exchanges other data with the platform. For a local user, the exchange might be by interacting with some software application running on the platform. For a remote user, the exchange might involve a secure transaction. In either case, the data exchanged is 'signed' by the trusted device. The user can then have greater confidence that data is being exchanged with a platform whose behaviour can be trusted.
The trusted device uses cryptographic processes but does not necessarily provide an external interface to those cryptographic processes. Also, a most desirable implementation would be to make the trusted device tamperproof, to protect secrets by making them inaccessible to other platform functions and provide an environment that is substantially immune to unauthorised modification. Since tamper-proofing is impossible, the best approximation is a trusted device that is tamper-resistant, or tamper-detecting. The trusted device, therefore, preferably consists of one physical component that is tamper-resistant.

Techniques relevant to tamper-resistance are well known to those skilled in the art of security. These techniques include methods for resisting tampering (such as appropriate encapsulation of the trusted device), methods for detecting tampering (such as detection of out of specification voltages, X-rays, or loss of physical integrity in the trusted device casing), and methods for eliminating data when tampering is detected. Further discussion of appropriate techniques can be found at http://www.cl.cam.ac.uk/∼mgk25/tamper.html. It will be appreciated that, although tamper-proofing is a most desirable feature of the present invention, it does not enter into the normal operation of the invention and, as such, is beyond the scope of the present invention and will not be described in any detail herein.

The trusted device is preferably a physical one because it must be difficult to forge. It is most preferably tamper-resistant because it must be hard to counterfeit. It typically has an engine capable of using cryptographic processes because it is required to prove identity, both locally and at a distance, and it contains at least one method of measuring some integrity metric of the platform with which it is associated.

A trusted platform 10 is illustrated in the diagram in Figure 1. The platform 10 includes the standard features of a keyboard 14 (which provides a user's confirmation key), mouse 16 and monitor 18, which provide the physical 'user interface' of the platform. This embodiment of a trusted platform also contains a smart card reader 12. Along side the smart card reader 12, there is illustrated a smart card 19 to allow trusted user interaction with the trusted platform as shall be described further below. In the platform 10, there are a plurality of modules 15: these are other functional elements of the trusted platform of essentially any kind appropriate to that platform.. The functional significance of such elements is not relevant to the present invention and will not be discussed further herein. Additional components of the trusted computer entity will typically include one or more local area network (LAN) ports, one or more modem ports, and one or more power supplies, cooling fans and the like.

As illustrated in Figure 2, the motherboard 20 of the trusted computing platform 10 includes (among other standard components) a main processor 21, main memory 22, a trusted device 24, a data bus 26 and respective control lines 27 and lines 28, BIOS memory 29 containing the BIOS program for the platform 10 and an Input/Output (IO) device 23, which controls interaction between the components of the motherboard and the smart card reader 12, the keyboard 14, the mouse 16 and the monitor 18 (and any additional peripheral devices such as a modem, printer, scanner or the like). The main memory 22 is typically random access memory (RAM). In operation, the platform 10 loads the operating system, for example Windows NT™, into RAM from hard disk (not shown). Additionally, in operation, the platform 10 loads the processes or applications that may be executed by the platform 10 into RAM from hard disk (not shown).

The computer entity can be considered to have a logical, as well as a physical, architecture. The logical architecture has a same basic division between the computer platform, and the trusted component, as is present with the physical architecture described in Figs. 1 to 4 herein. That is to say, the trusted component is logically distinct from the computer platform to which it is physically related. The computer entity comprises a user space being a logical space which is physically resident on the computer platform (the first processor and first data storage means) and a trusted component space being a logical space which is physically resident on the trusted component. In the user space are one or a plurality of drivers, one or a plurality of applications programs, a file storage area; smart card reader; smart card interface; and a software agent which can perform operations in the user space and report back to trusted component. The trusted component space is a logical area based upon and physically resident in the trusted component, supported by the second data processor and second memory area of the trusted component. Monitor 18 receives images directly from the trusted component space. External to the computer entity are external communications networks e.g. the Internet, and various local area networks, wide area networks which are connected to the user space via the drivers (which may include one or more modem ports). An external user smart card inputs into smart card reader in the user space.

Typically, in a personal computer the BIOS program is located in a special reserved memory area, the upper 64K of the first megabyte do the system memory (addresses FØØØh to FFFFh), and the main processor is arranged to look at this memory location first, in accordance with an industry wide standard.

The significant difference between the platform and a conventional platform is that, after reset, the main processor is initially controlled by the trusted device, which then hands control over to the platform-specific BIOS program, which in turn initialises all input/output devices as normal. After the BIOS program has executed, control is handed over as normal by the BIOS program to an operating system program, such as Windows NT (TM), which is typically loaded into main memory 22 from a hard disk drive (not shown).

Clearly, this change from the normal procedure requires a modification to the implementation of the industry standard, whereby the main processor 21 is directed to address the trusted device 24 to receive its first instructions. This change may be made simply by hard-coding a different address into the main processor 21. Alternatively, the trusted device 24 may be assigned the standard BIOS program address, in which case there is no need to modify the main processor configuration.

It is highly desirable for the BIOS boot block to be contained within the trusted device 24. This prevents subversion of the obtaining of the integrity metric (which could otherwise occur if rogue software processes are present) and prevents rogue software processes creating a situation in which the BIOS (even if correct) fails to build the proper environment for the operating system.

Although, in the preferred embodiment to be described, the trusted device 24 is a single, discrete component, it is envisaged that the functions of the trusted device 24 may alternatively be split into multiple devices on the motherboard, or even integrated into one or more of the existing standard devices of the platform. For example, it is feasible to integrate one or more of the functions of the trusted device into the main processor itself, provided that the functions and their communications cannot be subverted. This, however, would probably require separate leads on the processor for sole use by the trusted functions. Additionally or alternatively, although in the present embodiment the trusted device is a hardware device that is adapted for integration into the motherboard 20, it is anticipated that a trusted device may be implemented as a 'removable' device, such as a dongle, which could be attached to a platform when required. Whether the trusted device is integrated or removable is a matter of design choice. However, where the trusted device is separable, a mechanism for providing a logical binding between the trusted device and the platform should be present.

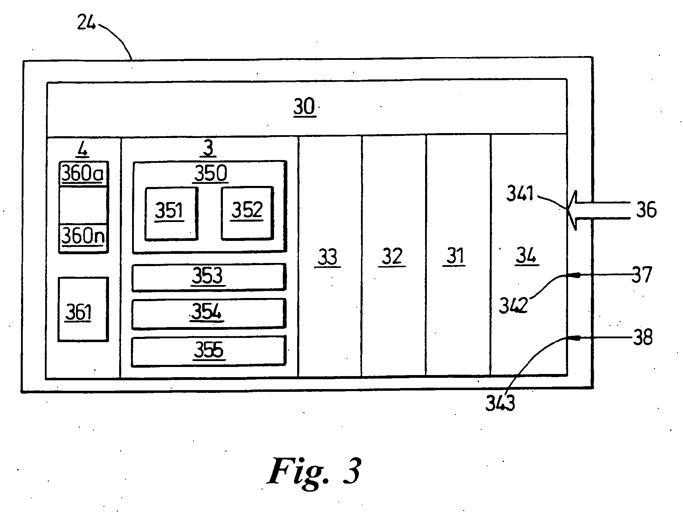

The trusted device 24 comprises a number of blocks, as illustrated in Figure 3. After system reset, the trusted device 24 performs a secure boot process to ensure that the operating system of the platform 10 (including the system clock and the display on the monitor) is running properly and in a secure manner. During the secure boot process, the trusted device 24 acquires an integrity metric of the computing platform 10. The trusted device 24 can also perform secure data transfer and; for example, authentication between it and a smart card via encryption/decryption and signature/verification. The trusted device 24 can also securely enforce various security control policies, such as locking of the user interface.

Specifically, the trusted device comprises: a controller 30 programmed to control the overall operation of the trusted device 24, and interact with the other functions on the trusted device 24 and with the other devices on the motherboard 20; a measurement function 31 for acquiring the integrity metric from the platform 10; a cryptographic function 32 for signing, encrypting or decrypting specified data; an authentication function 33 for authenticating a smart card; and interface circuitry 34 having appropriate ports (36, 37 & 38) for connecting the trusted device 24 respectively to the data bus 26, control lines 27 and address lines 28 of the motherboard 20. Each of the blocks in the trusted device 24 has access (typically via the controller 30) to appropriate volatile memory areas 4 and/or non-volatile memory areas 3 of the trusted device 24. Additionally, the trusted device 24 is designed, in a known manner, to be tamper resistant.

For reasons of performance, the trusted device 24 may be implemented as an application specific integrated circuit (ASIC). However, for flexibility, the trusted device 24 is preferably an appropriately programmed micro-controller. Both ASICs and micro-controllers are well known in the art of microelectronics and will not be considered herein in any further detail.

One item of data stored in the non-volatile memory 3 of the trusted device 24 is a certificate 350. The certificate 350 contains at least a public key 351 of the trusted device 24 and an authenticated value 352 of the platform integrity metric measured by a trusted party (TP). The certificate 350 is signed by the TP using the TP's private key prior to it being stored in the trusted device 24. In later communications sessions, a user of the platform 10 can verify the integrity of the platform 10 by comparing the acquired integrity metric with the authentic integrity metric 352. If there is a match, the user can be confident that the platform 10 has not been subverted. Knowledge of the TP's generally-available public key enables simple verification of the certificate 350. The non-volatile memory 35 also contains an identity (ID) label 353. The ID label 353 is a conventional ID label, for example a serial number, that is unique within some context. The ID label 353 is generally used for indexing and labelling of data relevant to the trusted device 24, but is insufficient in itself to prove the identity of the platform 10 under trusted conditions.

The trusted device 24 is equipped with at least one method of reliably measuring or acquiring the integrity metric of the computing platform 10 with which it is associated. In the present embodiment, the integrity metric is acquired by the measurement function 31 by generating a digest of the BIOS instructions in the BIOS memory. Such an acquired integrity metric, if verified as described above, gives a potential user of the platform 10 a high level of confidence that the platform 10 has not been subverted at a hardware, or BIOS program, level. Other known processes, for example virus checkers, will typically be in place to check that the operating system and application program code has not been subverted.

The measurement function 31 has access to: non-volatile memory 3 for storing a hash program 354 and a private key 355 of the trusted device 24, and volatile memory 4 for storing acquired integrity metric in the form of a digest 361. In appropriate embodiments, the volatile memory 4 may also be used to store the public keys and associated ID labels 360a-360n of one or more authentic smart cards 19s that can be used to gain access to the platform 10.

In one preferred implementation, as well as the digest, the integrity metric includes a Boolean value, which is stored in volatile memory 4 by the measurement function 31, for reasons that will become apparent.

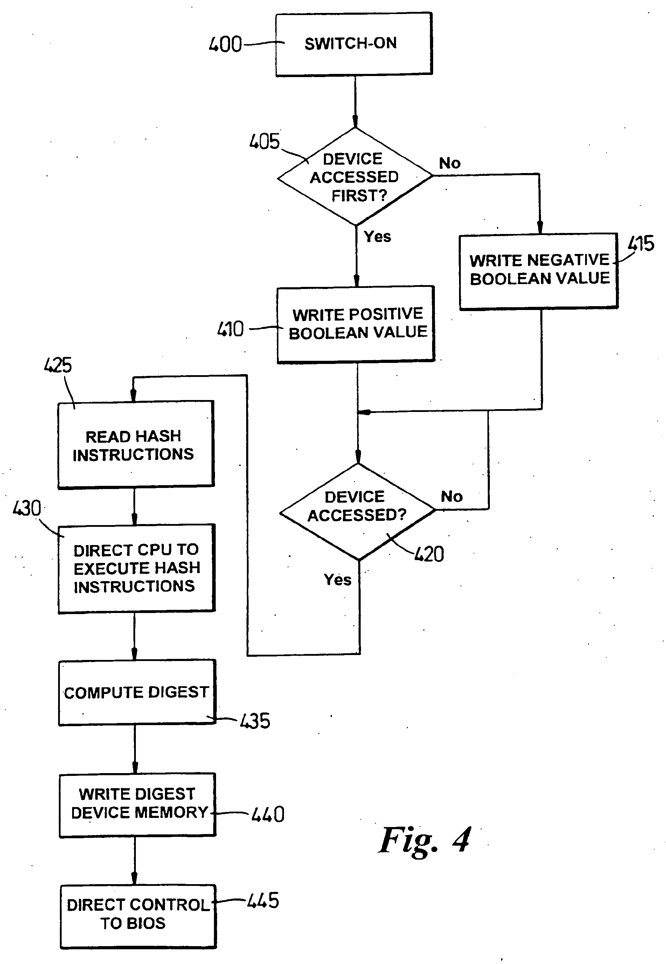

A preferred process for acquiring an integrity metric will now be described with reference to Figure 4.

In step 400, at switch-on, the measurement function 31 monitors the activity of the main processor 21 on the data, control and address lines (26, 27 & 28) to determine whether the trusted device 24 is the first memory accessed. Under conventional operation, a main processor would first be directed to the BIOS memory first in order to execute the BIOS program. However, in accordance with the present embodiment, the main processor 21 is directed to the trusted device 24, which acts as a memory. In step 405, if the trusted device 24 is the first memory accessed, in step 410, the measurement function 31 writes to non-volatile memory 3 a Boolean value, which indicates that the trusted device 24 was the first memory accessed. Otherwise, in step 415, the measurement function writes a Boolean value which indicates that the trusted device 24 was not the first memory accessed.

In the event the trusted device 24 is not the first accessed, there is of course a chance that the trusted device 24 will not be accessed at all. This would be the case, for example, if the main processor 21 were manipulated to run the BIOS program first. Under these circumstances, the platform would operate, but would be unable to verify its integrity on demand, since the integrity metric would not be available. Further, if the trusted device 24 were accessed after the BIOS program had been accessed, the Boolean value would clearly indicate lack of integrity of the platform.

In step 420, when (or if) accessed as a memory by the main processor 21, the main processor 21 reads the stored native hash instructions 354 from the measurement function 31 in step 425. The hash instructions 354 are passed for processing by the main processor 21 over the data bus 26. In step 430, main processor 21 executes the hash instructions 354 and uses them, in step 435, to compute a digest of the BIOS memory 29, by reading the contents of the BIOS memory 29 and processing those contents according to the hash program. In step 440, the main processor 21 writes the computed digest 361 to the appropriate non-volatile memory location 4 in the trusted device 24. The measurement function 31, in step 445, then calls the BIOS program in the BIOS memory 29, and execution continues in a conventional manner.

Clearly, there are a number of different ways in which the integrity metric may be calculated, depending upon the scope of the trust required. The measurement of the BIOS program's integrity provides a fundamental check on the integrity of a platform's underlying processing environment. The integrity metric should be of such a form that it will enable reasoning about the validity of the boot process - the value of the integrity metric can be used to verify whether the platform booted using the correct BIOS. Optionally, individual functional blocks within the BIOS could have their own digest values, with an ensemble BIOS digest being a digest of these individual digests. This enables a policy to state which parts of BIOS operation are critical for an intended purpose, and which are irrelevant (in which case the individual digests must be stored in such a manner that validity of operation under the policy can be established).

Other integrity checks could involve establishing that various other devices, components or apparatus attached to the platform are present and in correct working order. In one example, the BIOS programs associated with a SCSI controller could be verified to ensure communications with peripheral equipment could be trusted. In another example, the integrity of other devices, for example memory devices or co-processors, on the platform could be verified by enacting fixed challenge/response interactions to ensure consistent results. Where the trusted device 24 is a separable component, some such form of interaction is desirable to provide an appropriate logical binding between the trusted device 24 and the platform. Also, although in the present embodiment the trusted device 24 utilises the data bus as its main means of communication with other parts of the platform, it would be feasible, although not so convenient, to provide alternative communications paths, such as hard-wired paths or optical paths. Further, although in the present embodiment the trusted device 24 instructs the main processor 21 to calculate the integrity metric, it is anticipated that, in other embodiments, the trusted device itself is arranged to measure one or more integrity metrics.

Preferably, the BIOS boot process includes mechanisms to verify the integrity of the boot process itself. Such mechanisms are already known from, for example, Intel's draft "Wired for management baseline specification v 2.0 - BOOT Integrity Service", and involve calculating digests of software or firmware before loading that software or firmware. Such a computed digest is compared with a value stored in a certificate provided by a trusted entity, whose public key is known to the BIOS. The software/firmware is then loaded only if the computed value matches the expected value from the certificate, and the certificate has been proven valid by use of the trusted entity's public key. Otherwise, an appropriate exception handling routine is invoked.

Optionally, after receiving the computed BIOS digest, the trusted device 24 may inspect the proper value of the BIOS digest in the certificate and not pass control to the BIOS if the computed digest does not match the proper value. Additionally, or alternatively, the trusted device 24 may inspect the Boolean value and not pass control back to the BIOS if the trusted device 24 was not the first memory accessed. In either of these cases, an appropriate exception handling routine may be invoked.

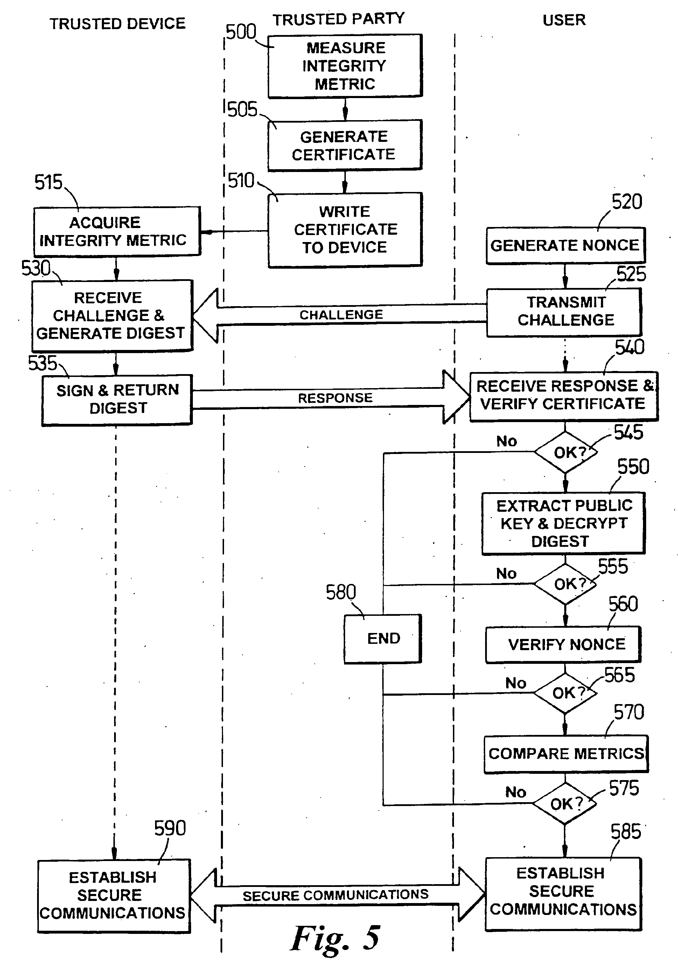

Figure 5 illustrates the flow of actions by a TP, the trusted device 24 incorporated into a platform, and a user (of a remote platform) who wants to verify the integrity of the trusted platform. It will be appreciated that substantially the same steps as are depicted in Figure 5 are involved when the user is a local user. In either case, the user would typically rely on some form of software application to enact the verification. It would be possible to run the software application on the remote platform or the trusted platform. However, there is a chance that, even on the remote platform, the software application could be subverted in some way. Therefore, it is preferred that, for a high level of integrity, the software application would reside on a smart card of the user, who would insert the smart card into an appropriate reader for the purposes of verification. Particular embodiments relate to such an arrangement.

At the first instance, a TP, which vouches for trusted platforms, will inspect the type of the platform to decide whether to vouch for it or not. This will be a matter of policy. If all is well, in step 500, the TP measures the value of integrity metric of the platform. Then, the TP generates a certificate, in step 505, for the platform. The certificate is generated by the TP by appending the trusted device's public key, and optionally its ID label, to the measured integrity metric, and signing the string with the TP's private key.

The trusted device 24 can subsequently prove its identity by using its private key to process some input data received from the user and produce output data, such that the input/output pair is statistically impossible to produce without knowledge of the private key. Hence, knowledge of the private key forms the basis of identity in this case. Clearly, it would be feasible to use symmetric encryption to form the basis of identity. However, the disadvantage of using symmetric encryption is that the user would need to share his secret with the trusted device. Further, as a result of the need to share the secret with the user, while symmetric encryption would in principle be sufficient to prove identity to the user, it would insufficient to prove identity to a third party, who could not be entirely sure the verification originated from the trusted device or the user.

In step 510, the trusted device 24 is initialised by writing the certificate 350 into the appropriate non-volatile memory locations 3 of the trusted device 24. This is done, preferably, by secure communication with the trusted device 24 after it is installed in the motherboard 20. The method of writing the certificate to the trusted device 24 is analogous to the method used to initialise smart cards by writing private keys thereto. The secure communications is supported by a 'master key', known only to the TP, that is written to the trusted device (or smart card) during manufacture, and used to enable the writing of data to the trusted device 24; writing of data to the trusted device 24 without knowledge of the master key is not possible.

At some later point during operation of the platform, for example when it is switched on or reset, in step 515, the trusted device 24 acquires and stores the integrity metric 361 of the platform.

When a user wishes to communicate with the platform, in step 520, he creates a nonce, such as a random number, and, in step 525, challenges the trusted device 24 (the operating system of the platform, or an appropriate software application, is arranged to recognise the challenge and pass it to the trusted device 24, typically via a BIOS-type call, in an appropriate fashion). The nonce is used to protect the user from deception caused by replay of old but genuine signatures (called a 'replay attack') by untrustworthy platforms. The process of providing a nonce and verifying the response is an example of the well-known 'challenge/response' process.

In step 530, the trusted device 24 receives the challenge and creates an appropriate response. This may be a digest of the measured integrity metric and the nonce, and optionally its ID label. Then, in step 535, the trusted device 24 signs the digest, using its private key, and returns the signed digest, accompanied by the certificate 350, to the user.

In step 540, the user receives the challenge response and verifies the certificate using the well known public key of the TP: The user then, in step 550, extracts the trusted device's 24 public key from the certificate and uses it to decrypt the signed digest from the challenge response. Then, in step 560, the user verifies the nonce inside the challenge response. Next, in step 570, the user compares the computed integrity metric, which it extracts from the challenge response, with the proper platform integrity metric, which it extracts from the certificate. If any of the foregoing verification steps fails, in steps 545, 555, 565 or 575, the whole process ends in step 580 with no further communications taking place.

Assuming all is well, in steps 585 and 590, the user and the trusted platform use other protocols to set up secure communications for other data, where the data from the platform is preferably signed by the trusted device 24.

Further refinements of this verification process are possible. It is desirable that the challenger becomes aware, through the challenge, both of the value of the platform integrity metric and also of the method by which it was obtained. Both these pieces of information are desirable to allow the challenger to make a proper decision about the integrity of the platform. The challenger also has many different options available - it may accept that the integrity metric is recognised as valid in the trusted device 24, or may alternatively only accept that the platform has the relevant level of integrity if the value of the integrity metric is equal to a value held by the challenger (or may hold there to be different levels of trust in these two cases).

The techniques of signing, using certificates, and challenge/response, and using them to prove identity, are well known to those skilled in the art of security and therefore need not be described in any more detail herein.

The user's smart card 19 is a token device, separate from the computing entity, which interacts with the computing entity via the smart card reader port 19. A user may have several different smart cards issued by several different vendors or service providers, and may gain access to the internet or a plurality of network computers from any one of a plurality of computing entities as described herein, which are provided with a trusted component and smart card reader. A user's trust in the individual computing entity to which s/he is using is derived from the interaction between the user's trusted smart card token and the trusted component of the computing entity. The user relies on their trusted smart card token to verify the trustworthiness of the trusted component.

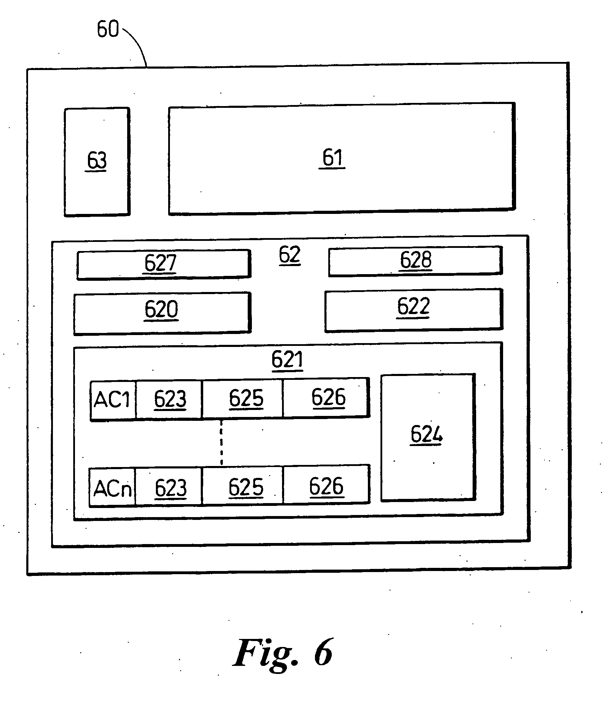

A processing part 60 of a user smart card 19 is illustrated in Figure 6. As shown, the user smart card 19 processing part 60 has the standard features of a processor 61, memory 62 and interface contacts 63. The processor 61 is programmed for simple challenge/response operations involving authentication of the user smart card 19 and verification of the platform 10, as will be described below. The memory 62 contains its private key 620, its public key 628, (optionally) a user profile 621, the public key 622 of the TP and an identity 627. The user profile 621 lists the allowable auxiliary smart cards 20 AC1-ACn usable by the user, and the individual security policy 624 for the user. For each auxiliary smart card 20, the user profile includes respective identification information 623, the trust structure 625 between the smart cards (if one exists) and, optionally, the type or make 626 of the smart card.

In the user profile 621, each auxiliary smart card 20 entry AC1-ACn includes associated identification information 623, which varies in dependence upon the type of card. For example, identification information for a cash card typically includes a simple serial number, whereas, for a crypto card, the identification information typically comprises the public key (or certificate) of the crypto card (the private key being stored secretly on the crypto card itself).

The 'security policy' 624 dictates the permissions that the user has on the platform 10 while using an auxiliary smart card 20. For example, the user interface may be locked or unlocked while an auxiliary smart card 20 is in use, depending on the function of the auxiliary smart card 20. Additionally, or alternatively, certain files or executable programs on the platform 10 may be made accessible or not, depending on how trusted a particular auxiliary smart card 20 is. Further, the security policy 624 may specify a particular mode of operation for the auxiliary smart card 20, such as 'credit receipt' or 'temporary delegation', as will be described below.

A 'trust structure' 625 defines whether an auxiliary smart card 20 can itself 'introduce' further auxiliary smart cards 20 into the system without first re-using the user smart card 19. In the embodiments described in detail herein, the only defined trust structure is between the user smart card 19 and the auxiliary smart cards 20 that can be introduced to the platform 10 by the user smart card 19. Introduction may be 'single session' or 'multi-session', as will be described below.

However, there is no reason why certain auxiliary smart cards 20 could not in practice introduce further auxiliary smart cards 20. This would require an auxiliary smart card 20 to have an equivalent of a user profile listing the or each auxiliary smart card that it is able to introduce.

Use of auxiliary smart cards 20 is not a necessary feature of the present invention, and is not described further in the present application. Use of auxiliary smart cards is the subject of the present applicant's copending International Patent Application No. PCT/GB00/00751dated 5 March 2000 and entitled "Computing Apparatus and Methods of Operating Computing Apparatus", which is incorporated by reference herein.

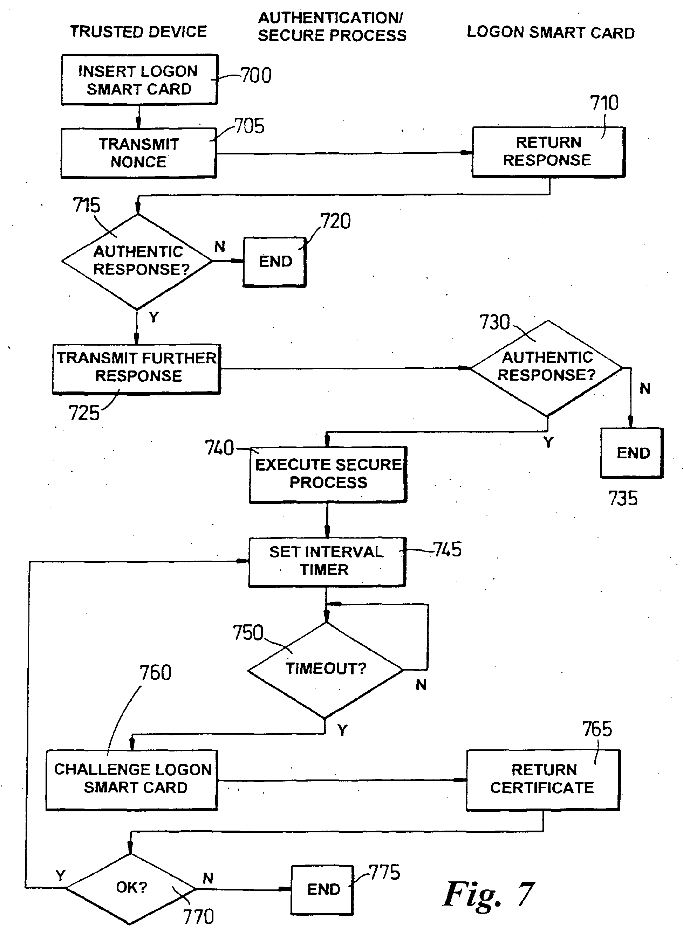

A preferred process for authentication between a user smart card 19 and a platform 10 will now be described with reference to the flow diagram in Figure 7. As will be described, the process conveniently implements a challenge/response routine. There exist many available challenge/response mechanisms. The implementation of an authentication protocol used in the present embodiment is mutual (or 3-step) authentication, as described in ISO/IEC 9798-3. Of course, there is no reason why other authentication procedures cannot be used, for example 2-step or 4-step, as also described in ISO/IEC 9798-3.

Initially, the user inserts their user smart card 19 into the smart card reader 12 of the platform 10 in step 700. Beforehand, the platform 10 will typically be operating under the control of its standard operating system and executing the authentication process, which waits for a user to insert their user smart card 19. Apart from the smart card reader 12 being active in this way, the platform 10 is typically rendered inaccessible to users by 'locking' the user interface (i.e. the screen, keyboard and mouse).

When the user smart card 19 is inserted into the smart card reader 12, the trusted device 24 is triggered to attempt mutual authentication in step by generating and transmitting a nonce A to the user smart card 19 in step 705. A nonce, such as a random number, is used to protect the originator from deception caused by replay of old but genuine responses (called a 'replay attack') by untrustworthy third parties.

In response, in step 710, the user smart card 19 generates and returns a response comprising the concatenation of: the plain text of the nonce A, a new nonce B generated by the user smart card 19, the ID 353 of the trusted device 24 and some redundancy; the signature of the plain text, generated by signing the plain text with the private key of the user smart card 19; and a certificate containing the ID and the public key of the user smart card 19.

The trusted device 24 authenticates the response by using the public key in the certificate to verify the signature of the plain text in step 715. If the response is not authentic, the process ends in step 720. If the response is authentic, in step 725 the trusted device 24 generates and sends a further response including the concatenation of: the plain text of the nonce A, the nonce B, the ID 627 of the user smart card 19 and the acquired integrity metric; the signature of the plain text, generated by signing the plain text using the private key of the trusted device 24; and the certificate comprising the public key of the trusted device 24 and the authentic integrity metric, both signed by the private key of the TP.

The user smart card 19 authenticates this response by using the public key of the TP and comparing the acquired integrity metric with the authentic integrity metric, where a match indicates successful verification, in step 730. If the further response is not authentic, the process ends in step 735.

If the procedure is successful, both the trusted device 24 has authenticated the user smart card 19 and the user smart card 19 has verified the integrity of the trusted platform 10 and, in step 740, the authentication process executes the secure process for the user. Then, the authentication process sets an interval timer in step 745. Thereafter, using appropriate operating system interrupt routines, the authentication process services the interval timer periodically to detect when the timer meets or exceeds a pre-determined timeout period in step 750.

Clearly, the authentication process and the interval timer run in parallel with the secure process. When the timeout period is met or exceeded, the authentication process triggers the trusted device 24 to re-authenticate the user smart card 19, by transmitting a challenge for the user smart card 19 to identify itself in step 760. The user smart card 19 returns a certificate including its ID 627 and its public key 628 in step 765. In step 770, if there is no response (for example, as a result of the user smart card 19 having been removed) or the certificate is no longer valid for some reason (for example, the user smart card has been replaced with a different smart card), the session is terminated by the trusted device 24 in step 775. Otherwise, in step 770, the process from step 745 repeats by resetting the interval timer.

The techniques of signing, using certificates, and challenge/response, and using them to prove identity, are well known to those skilled in the art of security and will, thus, not be described in any more detail herein.

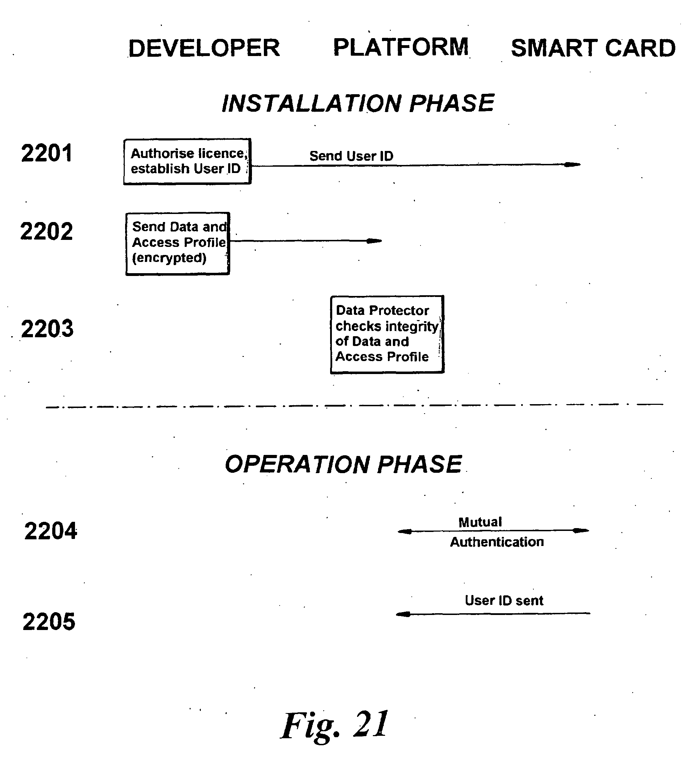

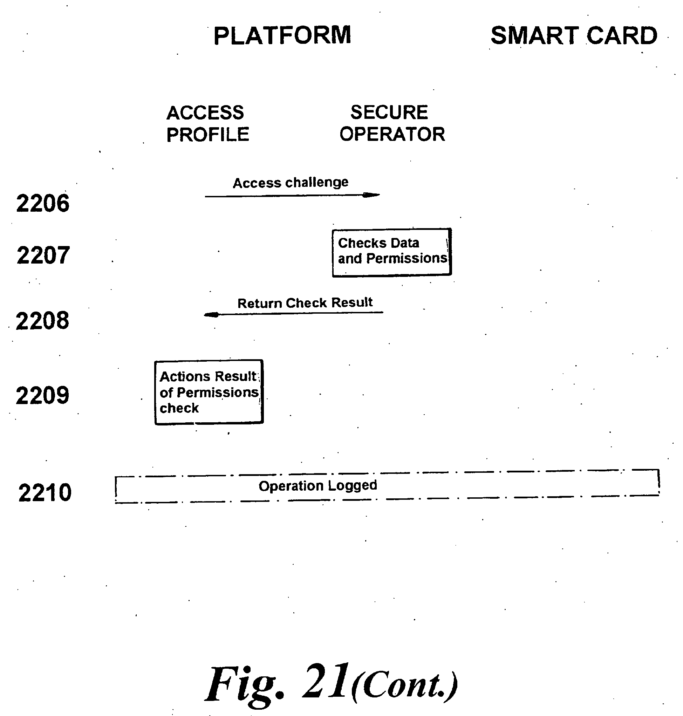

Referring now to Figures 21 and 8 to 13, a specific embodiment of the system will now be described. This system is particularly appropriate for application of the present invention. In Figure 21, a host computer 100 has a main CPU 102, a hard disk drive 104, a PCI network interface card 106 and DRAM memory 108 with conventional ("normal") communications paths 110 (such as ISA, EISA, PCI, USB) therebetween. The network interface card 106 also has an external communication path 112 with the world outside the host computer 100.

The network interface card 106 is logically divided into "red" and "black" data zones 114,116 with an interface 118 therebetween. In the red zone 114, data is usually plain text and is sensitive and vulnerable to undetectable alteration and undesired eavesdropping. In the black data zone 116, data is protected from undetected alteration and undesired eavesdropping (preferably encrypted by standard crypto mechanisms). The interface 118 ensures that red information does not leak into the black zone 116. The interface 118 preferably uses standard crypto methods and electronic isolation techniques to separate the red and black zones 114,116. The design and construction of such red and black zones 114,116 and the interface 118 is well known to those skilled in the art of security and electronics, particularly in the military field. The normal communication path 110 and external communication path 112 connect with the black zone 116 of the network interface card 106.

The host computer 100 also includes a trusted module 120 which is connected, not only to the normal communication paths 110, but also by mutually separate additional communication paths 122 (sub-referenced 122a,122b,122c) to the CPU 102, hard disk drive 104 and the red zone 114 of the network interface card 106. By way of example, the trusted module 120 does not have such a separate additional communication path 122 with the memory 108.

The trusted module 120 can communicate with the CPU 102, hard disk drive 104 and red zone 114 of the network interface card 106 via the additional communication paths 122a,b,c, respectively. It can also communicate with the CPU 102, hard disk drive 104, black zone 116 of the network interface card 106 and the memory 108 *via* the normal communication paths 110. The trusted module 120 can also act as a 100VG switching centre to route certain information between the CPU 102, hard disk drive 104 and the red zone 114 of the network interface card 106, via the trusted module 120 and the additional communication paths 122, under control of a policy stored in the trusted module. The trusted module 120 can also generate cryptographic keys and distribute those keys to the CPU 102, the hard disk drive 104, and the red zone 114 of the network interface card 106 via the additional communication paths 122a,b,c, respectively.

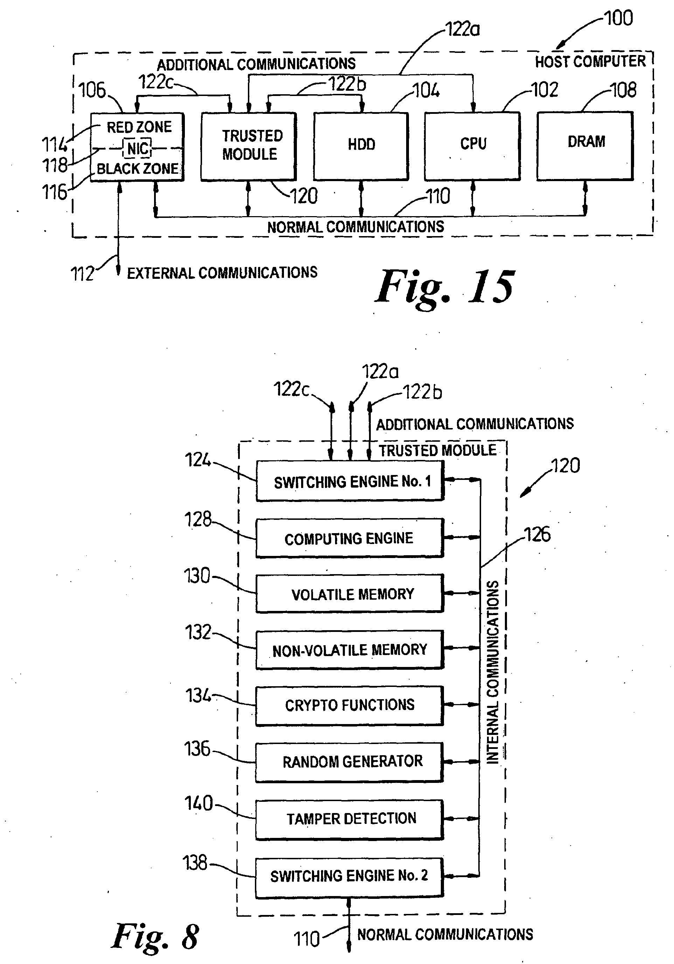

Figure 8 illustrates the physical architecture of the trusted module 120. A first switching engine 124 is connected separately to the additional communication paths 122a,b,c and also to an internal communication path 126 of the trusted module 120. This switching engine 124 is under control of a policy loaded into the trusted module 120. Other components of the trusted module 120 are:
- a computing engine 128 that manages the trusted module 120 and performs general purpose computing for the trusted module 120;
- volatile memory 130 that stores temporary data;
- non-volatile memory 132 that stores long term data;
- cryptographic engines 134 that perform specialist crypto functions such as encryption and key generation;
- a random number source 136 used primarily in crypto operations;
- a second switching engine 138 that connects the trusted module 120 to the normal communication paths 110; and
- tamper detection mechanisms 140,
all connected to the internal communication path 126 of the trusted module 120.

The trusted module 120 is based on a trusted device or module 24 as described in more detail above with reference to Figures 1 to 7.

With regard to crypto key generation and distribution, the trusted module 120 generates cryptographic keys, using the random number generator 136, a hash algorithm, and other algorithms, all of which are well known, *per se,* to those skilled in the art of security. The trusted module 120 distributes selected keys to the CPU 102, hard disk drive 104 and the red zone 114 of the network interface card 106 using the additional communication paths 122a,b,c, respectively, rather than the normal communications paths 110. Keys may be used for communications between the internal modules 102,104,106,120 of the platform over the normal communication paths 110. Other temporary keys may be used (by the network interface card 106 or CPU 102) for bulk encryption or decryption of external data using the SSL protocol after the trusted module 120 has completed the SSL handshaking phase that uses long term identity secrets that must not be revealed outside the trusted module 120. Other temporary keys may be used (by the hard disk drive 104 or CPU 102) for bulk encryption or decryption of data stored on the hard disk drive 104 after those temporary keys have been created or revealed inside the trusted module 120 using long term secrets that must not be revealed outside the trusted module 120.

The trusted module 120 enforces policy control over communications between modules by the selective distribution of encryption keys. The trusted module 120 enforces a policy ban on communications between given pairs of modules by refusing to issue keys that enable secure communications over the shared infrastructure 110 between those pairs of modules.

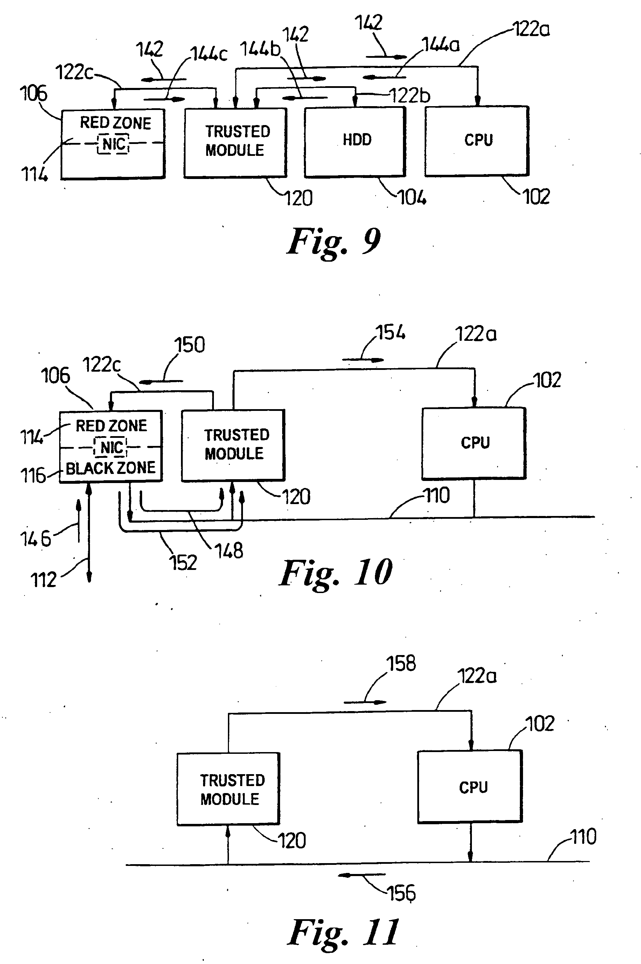

Figure 9 illustrates a process by which the trusted module 120 can perform a watchdog function and 'ping' the modules 102,104,106 connected to the additional communication paths 122. The trusted module generates a challenge 142 and sends it to the CPU 102, hard disk drive 104 and red zone 114 of the network interface card 106 using the additional communication paths 122a,b,c, respectively. Each of the CPU 102, hard disk drive 104 and network interface card 106 responds with a response 144a,b,c, respectively, on the respective additional communication path 122a,b,c to say whether the respective module is active, and preferably that the module is acting properly. The trusted module 120 notes the responses 144a,b,c and uses them as metrics in its responses to integrity challenges that are described above with reference to Figures 1 to 7.

Figure 10 illustrates the process by which incoming external secure messages are processed when the trusted module 120 is the only module in the platform with cryptographic capabilities. An external message 146 is received by the black zone 116 of the network interface card 106 using the external communication path 112. The network interface card 106 sends a protocol data unit 148 (to be described in further detail later) containing some data and a request for an authentication and integrity check to the trusted module 120 using the normal communication paths 110. The trusted module 120 performs the authentication and integrity checks using the long term keys inside the trusted module 120 that must not revealed outside the trusted module 120, and sends a protocol data unit 150 containing an 'OK' indication to the red zone 114 of the network interface card 106 using the additional communication path 122c. The network interface card 106 then sends a protocol data unit 152 containing some data and a request for decryption to the trusted module 120 using the normal communication paths 110. The trusted module 120 decrypts the data using either temporary or long term keys inside the trusted module 120, and sends a protocol data unit 154 containing the decrypted data to the CPU 102 using the additional communication path 122a. The CPU then takes appropriate action.

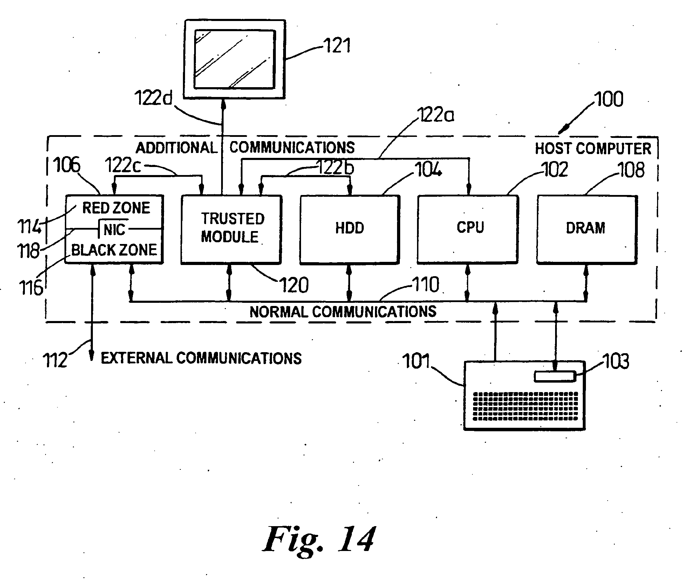

Figure 11 illustrates the process by which the CPU 102 requests a policy decision from the trusted module 120. This could be used, for example, when the CPU 102 must determine whether policy allows certain data to be manipulated or an application to be executed. This will be described in more later with reference to Figures 14 to 20. The CPU 102 sends a protocol data unit 156 containing a request to the trusted module 120 using the normal communication paths 110. The trusted module 120 processes the request 156 according to the policy stored inside the trusted module 120. The trusted module 120 sends a protocol data unit 158 containing a reply to the CPU 102 using the additional communication path 122a, in order that the CPU 102 can be sure that authorisation came from the trusted module 120. If the action is authorised, the CPU 102 takes the necessary action. Otherwise, it abandons the process.

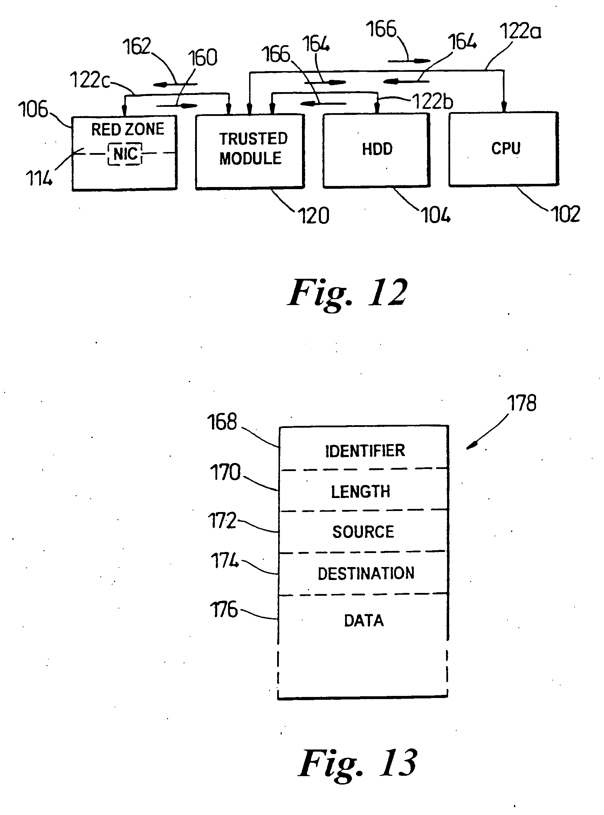

Figure 12 illustrates an example of the control of policy over protected communications between the modules 102,104,106. All of the communications in this example use the additional communication paths 122. The red zone 114 of the network interface card 106 sends a protocol data unit 160 that is destined for the hard disk drive 104 to the trusted module 120 on the additional data path 122c. In the case where the policy does not permit this, the trusted module 120 denies the request by sending a protocol data unit 162 containing a denial to the network interface card 106 on the additional data path 122c. Later, the CPU 102 requests sensitive data from the hard disk drive 104 by sending a protocol data unit 164 addressed to the hard disk drive, but sent on the additional data path 122a to the trusted module 120. The trusted module 120 checks that the policy allows this. In the case where it does, the trusted module 120 relays the protocol data unit 164 to the hard disk drive 104 on the additional data path 122b. The hard disk drive 104 provides the data and sends it in a protocol data unit 166 on the additional data path 122b back to the trusted module 120 addressed to the CPU 102. The trusted module 120 checks that the policy allows this, and, in the case where it does, relays the protocol data unit 166 to the CPU 102 on the additional data path 122a.

Figure 13 illustrates the format of the data protocol units 178 by which data is passed over the additional communication paths 122. The data protocol unit 178 has:-
- an identifier field 168 indicating the type of the protocol data unit;
- a length field 170 indicating the length of the protocol data unit;
- a source field 172 indicating the source of the protocol data unit;
- a destination field 174 indicating the destination of the protocol data unit;
- and so on, including in many cases a data field 176.

Not all fields are always necessary. For example, assuming the policy of the trusted module 120 forbids it to relay key protocol data units that that did not originate within the trusted module 120, the CPU 102, hard disk drive 104 and network interface card 106 can therefore assume that keys are always from the trusted module 120. Hence, source and destination fields are unnecessary in key protocol data units - such protocol data units are implicitly authenticated. The design and construction and use, *per se,* of protocol data units is well known to those skilled in the art of communications.

Specific embodiments of the present invention will now be described for use in a system employing trusted computing platforms and portable trusted modules (typically smart cards) as described above. Figure 14 illustrates a particularly appropriate form of trusted computing platform for the purpose, the platform being a development of the system described above with reference to Figures 15 and 7 to 13. In Figure 14, a display 121 is connected to the trusted module 120 by means of one 122d of the additional communications paths as described above. This enables the trusted module 120 to reliably write to the display, without fear of subversion from normal software, including the operating system. Also, the host computer 100 is connected to a keyboard 101 that has a built-in smart card reader 103, both of which are connected to the normal communications paths 110. A smart card which is inserted into the smart card reader 103 can be considered to be an additional trusted module and is therefore able to communicate securely with the trusted module 120.

There are several stages in which a system for restriction of access to data in accordance with the invention can be constructed: these stages may be considered as progressing from one to another. The first stage is to use generic operation protection software that performs checks upon operations applied to data and checks against unauthorised alteration and is protected against bypassing by integrity checking. Such operation protection software need not run within the trusted module itself. A preferred stage is the logical extension of such a system in which the operation protection software runs within the trusted module. A request to perform an operation upon some data will be sent to the trusted module, preferably from the access profile. The operation protection software in the trusted module will evaluate such a request and decide whether to allow this, based on the restrictions defined within the access profile. Preferably, the trusted module and an operating system of the platform have a dedicated communications path between them which is inaccessible to other parts of the computer platform (as in the Figure 14 structure). In the preferred model, the request from the secure operator to the operating system to access the data is preferably supplied via the dedicated communications path.

Architectures appropriate for operation according to the invention have now been described. Methods for implementing embodiments of the invention in such architectures will now be described below.

The procedures by which the system operates depend very much upon the particular trusted relationships in force between the developer, client computing platform (holding a trusted component or TC) and a trusted portable module such as a smart card (hereafter termed TPM). In the most general case, the TC must be registered with the data-provider in order that the data can be sent to the TC (or analogously, to the TPM, if the data is to be sent to the TPM). The TPM must also be registered with the licence-provider (very probably the same entity as the data-provider), in order that the user ID of the TPM can be incorporated into the licence before it is issued to the TC. This would be a suitable model for circumstances such as when given users share a PC, in an office environment for example. However, in scenarios where the users of a client machine will not be known in advance, such as where machines are available in public places such as airports, this approach is not possible. Instead, the licence needs to be customised to the user ID of the TPM, and given to the end-user either by a new TPM being issued by the licence-provider, or by this information being downloaded into one already held by the end-user. The licence will contain a reference to the name and version of the software, if appropriate, and the ways in which that software can be used by the end-user. When the data is installed into such a public shared trusted terminal, optionally a different access profile can be installed that can specify default restrictions upon the data installed upon it, or overriding restrictions, or a combination of both. For example, copying of a document could be forbidden unless an end-user specifically had this permission in their personal licence (held on their TPM). After the access profile has been transferred (preferably encrypted), preferably integrity checks are carried out and a digest of the profile is stored within the local TC.

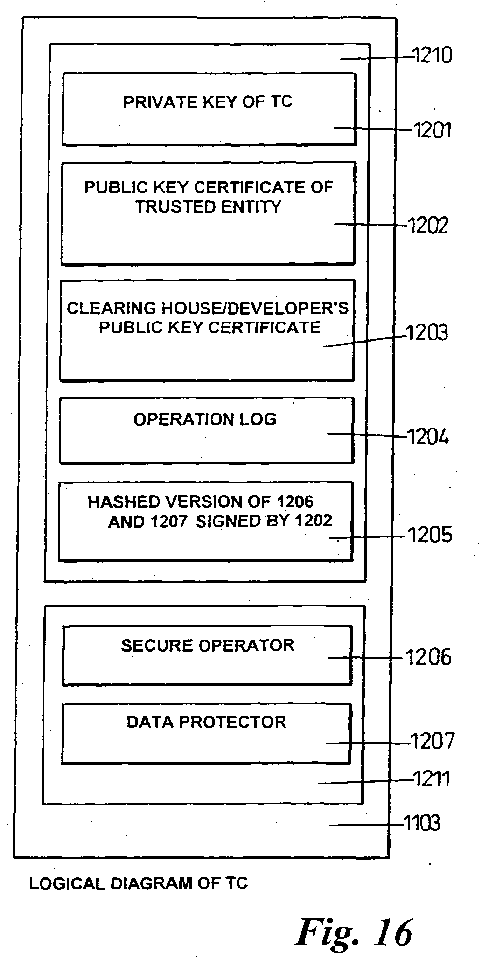

Figure 16 illustrates a logical diagram of the components of the TC 1103. These comprise operation protection software components 1211 and other operation protection data components 1210 within the trusted component 1103. The following components of the invention are operation protection code 1211 that should be run within a protected environment, as previously described, and preferably within the TC 1103 itself (though the skilled person will appreciate that an appropriate protected environment can be provided outside the TC 1103): the secure operator 1206, and the data protector 1207. Operation protection data components stored on the TC include the private key of the TC 1201, the public key certificate 1202 of a trusted entity, the developer's public key certificate 1203, a log 1204, and a hashed version 1205 of the secure operator 1206 and the data protector 1207, signed by the trusted entity. The operation of these logical components will be described further below.

Whenever data is to be installed onto the trusted platform, integrity and other checks should be carried out in order to safely download or upgrade data from a third party. Data installation will only proceed via the operating system ('OS') if such the expected integrity values match. If such checks succeed (in the sense of the data or wrapper not having been altered), the data protector will store in the TC (e.g. smart card) the digest of the data (and any access profile) which was appended to the data itself, together with a reference to the stored data. Optionally, an alternative data form used in integrity checking such as the integrity checksum of the data is stored instead in the TC (e.g. smart card).

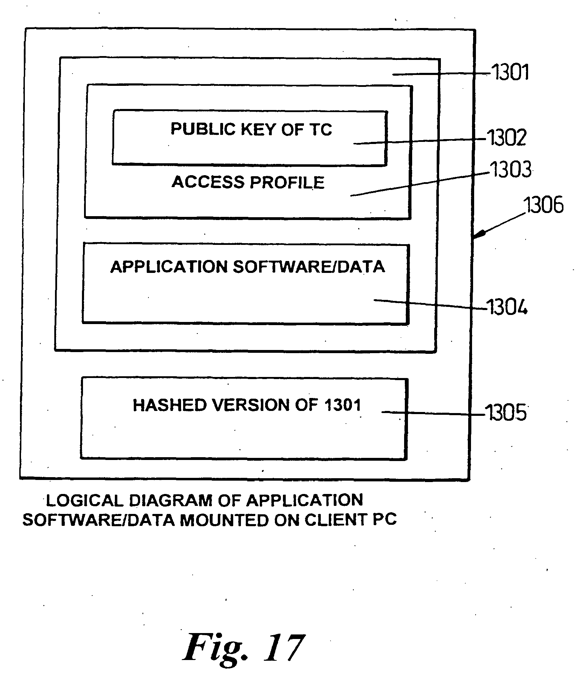

Figure 17 illustrates the structure of protected software or data 1306 within the client computer. Digital data 1304 on the client computer is associated with a access profile 1303, within which is stored the public key of the TC 1302. This data structure 1301 is stored together with a hashed version 1305 of the data structure 1301. This hashed version 1305 is signed with the clearinghouse or developer's private key. Preferably, the hashed version 1305 is stored within the TC itself (this is carried out during the installation process by the data protector 1207).

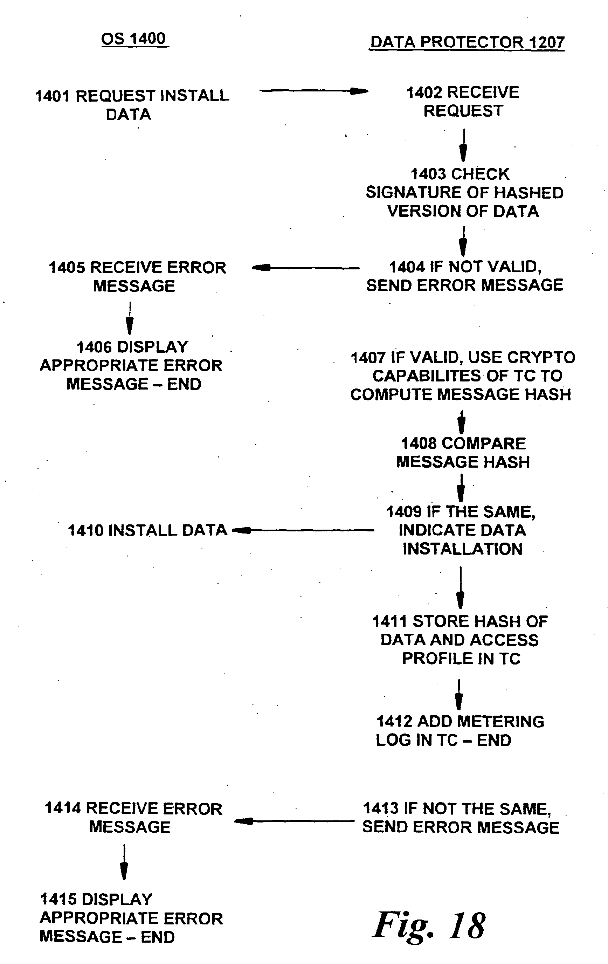

Figure 18 illustrates the flowchart for loading or upgrading software or other data onto the client platform. The steps shown in Figure 18 apply for the general case in which data protector 1207 may not be running within the TC 1103 itself, but can readily be adapted to the (simpler) case in which the data protector is running within the TC 1103.

The data to be installed is hashed and signed with the sender's private key, and this is appended to the data itself by the sender. Prior to sending of the data, it would be normal for the sender to require an integrity check of the trusted computing platform (as described above).

When the operating system 1400 of the trusted computing platform requests that the data should be installed in step 1401, the data protector 1207 receives the request in step 1402, and checks the signature of this message in step 1402, using the public key certificate corresponding to the sender, thereby checking authentication of the sender.

If authentication fails (step 1404), the data protector 1207 sends an error message to the operating system (step 1405) and the operating system 1400 causes an appropriate message to be displayed.

If authentication succeeds (step 1407), the data protector 1207 computes the hash of the message by using the cryptographic capabilities available within the TC 1103 and compares it to the message hash that is associated with the data (step 1408). This checks for integrity of the message.

If the hashes are the same (step 1409), the data protector 1207 saves a hash 1305 of the message 1304 and the corresponding access control data 1303 within the TC (step 1411) and indicates that the operating system 1400 can install the data as normal (step 1410). The TC makes a log of the installation and adds it to the relevant log file 1204 (step 1412).

If the hashes are not the same (step 1413), this indicates that the data has been altered, and that it should not be installed. The data protector 1207 sends an error message (step 1414) to the operating system 1400, which displays an appropriate message to the user (step 1415).

An alternative possibility is for data is sent to a user's smart card or other PTM for subsequent execution on a trusted computing system. This would a smart card as shown in Figure 6 also to contain within its trusted part code similar to data protector 1207. Again, an integrity check of the PTM would typically be required before installation of data, and the smart card would need capacity not only to store the data but also to store a digest of the data and access control data preferably within its trusted part. Installation of data may otherwise be essentially as described in Figure 18. It would be desirable in such an arrangement for an equivalent to operation log 1204 to be held on the PTM, preferably in the trusted part.

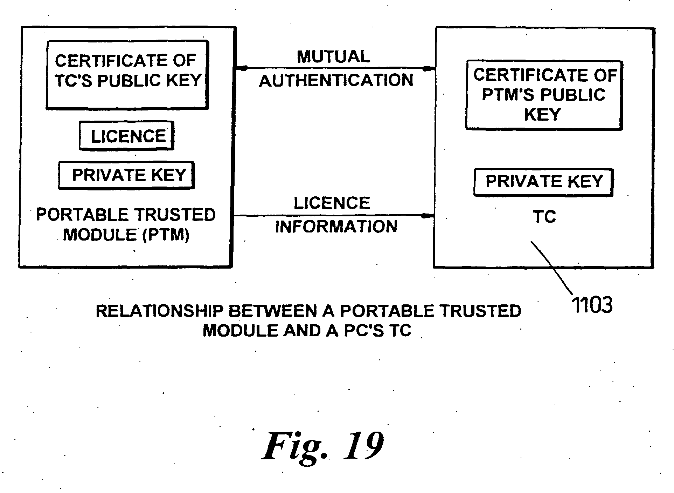

Figure 19 illustrates the relationships between a PTM 1106 and a TC 1103 relevant in embodiments of the present invention to execution of restricted code. There is mutual authentication at sign-on and the TC checks the PTM's ID (preferably via a certificate of the SC's public key) - this may be as shown in Figure 7. The user then asks to access data which is restricted. Before the secure operator 1206 on the TC refuses permission to the operating system 1400 of the trusted computing platform to access this data, the TC makes a check for a relevant user licence on the PTM. The operating system 1400 should therefore have a trusted input/output process for data: the skilled person will appreciate that this can be achieved in several ways, of which a particularly advantageous one is a secure hardware communications path between the secure operator software 1206 and the operating system 1400 that is not accessible to other software - this is achievable by the communication paths present in the system of Figure 14. The relevant part of the operating system will be checked upon BIS: optionally, the system integrity check to fail if the integrity check on this part of the operating system fails.

A typical approach to user access of restricted data may be as follows. When the user wishes to access particular data, perhaps via another program, the secure operator 1206 uses the access profile associated with the data (alternatives to use of access profiles may employ use of any licence-related information stored locally in order to see whether the user ID obtained during the last sign-on allows permission to carry out the required permission, or else whether there is generic permission to do so (irrespective or identity)). Preferably, the data protector 1206 will also check the integrity of the profile, and of the data. If an effective permission is found for the PTM user ID (or a general permission exists), permission will be given to the operating system 1400 to access the data. If not, the secure operator will query the PTM 1106 to find out if a licence is stored on the PTM 1106 relating to the data in question. If not, permission will be denied to the operating system to carry out the operation. However, if a license is stored on the PTM 1106 itself, the licensing information will be retrieved by being encrypted via a shared session key.and integrity checked (and possibly stored). Even if there is a license on the PTM 1106, a check may need to be made to see whether the current operation is valid. If so, permission will be given to the operating system to access the data; if not, permission will be denied. Preferably, before the operation takes place, the TC will also check that the PTM corresponding to that user ID is still inserted in the smart card reader.

If the access profile and data is altered, it may not be possible to match the data against the digest stored within the TC, as it might not be clear what is the corresponding entry. Hence, again, preferably the data protector will not allow any data to be executed if there is not a corresponding correct digest stored within it.

Specific approaches to operation restriction according to these principles will now be discussed.

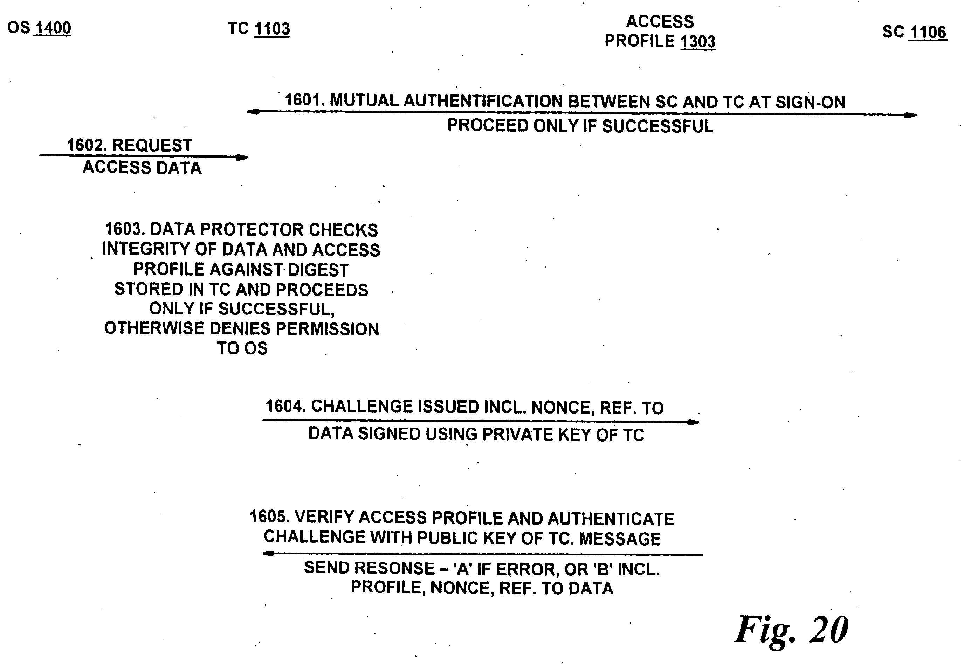

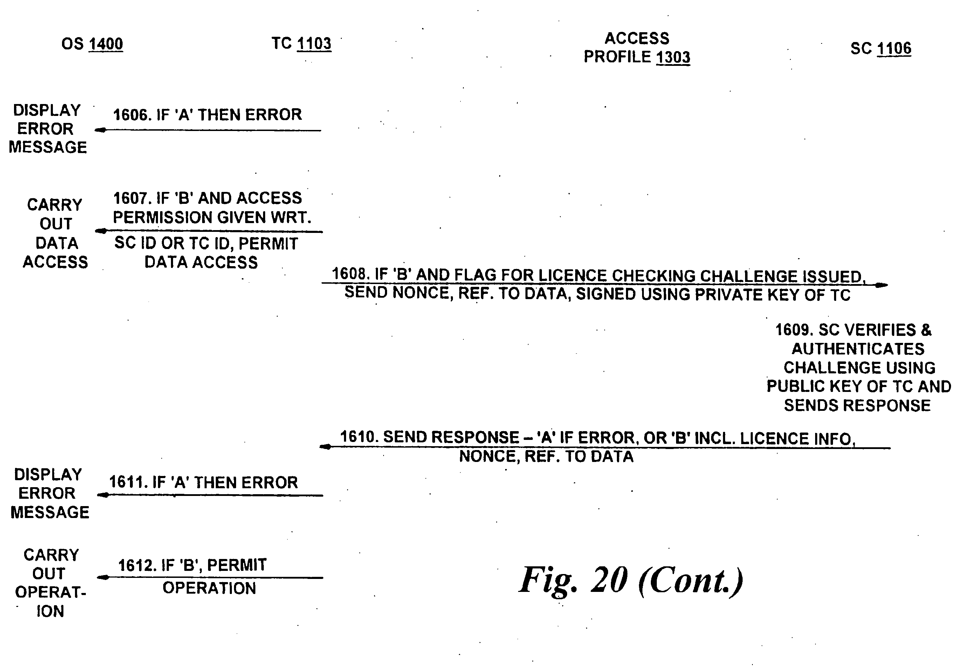

Figure 20 shows a flowchart for operation restriction using a model of checking where the operating system 1400 communicates with a secure operator 1206 which is in the TC 1103, and the with an access profile (outside the TC) associated with a piece of data which specifies the operations allowed by the developer upon that data. This is appropriate where, as is preferable, all operation protection software is mounted within the TC 1103. Communications between the operating system 1400, the operation protection software 1211 and the TC 1103 need to be protected against modification or spoofing. As indicated above, one option is to make part of the operating system trusted (the part dealing with data input and output), and this part of the OS can be integrity checked as part of the BIS procedure. If this part has been modified, then the platform integrity will fail. Another option is to use a trusted communication path (such as is shown in Figure 14) from the TC to the CPU when communicating with the operating system.

This approach is effective where individual users each have their own unique PTM. However, it can also be used where a smart card or other appropriate PTM is duplicated or shared amongst members of a group.

The steps shown in Figure 20, with appropriate interactions between operating system 1400, trusted component 1103, portable trusted module 1106 (here shown as a smart card, abbreviated to SC) and the access profile 1303, are as follows:

Upon sign-on using the smart card, there is mutual authentication between the TC and the smart card (step 1601). The TC stores the (current) smart card ID, which is preferably the certificate of the smart card public key.

When the user wishes to carry out an operation on some digital data, in general the operating system 1400 sends a message to the data protector 1207 (step 1602), which then checks (step 1603) whether there is a hash or checksum corresponding to the data or to the issuer of the data and access profile stored within the TC.

If there is no such hash or checksum, the data protector 1207 relays a message to the operating system 1400 and the data is not executed.

If there is such a hash or checksum present, the secure operator 1206 issues a challenge/response to the access profile 1303 corresponding to that piece of data, by means of sending a random number (nonce), together with a reference to the data (e.g. its title), signed using the private key of the TC 1103 (step 1604). Such a challenge/response protocol is well understood within this art (and has been described, for example, with respect to Figures 5 and 7 above).

The access profile 1303 verifies and authenticates the secure operator's challenge using the public key of the TC 1103, and returns a message (step 1604). If authentication is successful, the response incorporates the nonce and reference to the data. The nonce is included to give protection against replay attacks. If authentication is not successful, or if the access profile signals an error because it does not wish the data operation to be carried out on this particular machine by any user, the secure operator relays a message to the operating system and the data is not operated upon (step 1606).

The secure operator will make the appropriate operating check dependent upon the information contained within the access profile, with reference to the smart card ID and the TC ID. If no further information is required, the secure operator allows the operating system to carry out the data access (step 1607).

If there is no access profile associated with the data, the secure operator requires a model of how to proceed. This may be to allow for license checking on the smart card. A default model previously set within it by an administrator may be brought into operation (either after or instead of license checking against the smart card). This may simply be to deny data access, or may be more sophisticated - for example, the administrator may wish to stipulate that deletion can occur by default, but that copying more than a certain number of times cannot.

If no explicit access permissions are given, or perhaps if the access profile contains a flag that licences can be checked for this type of data access, the secure operator issues a challenge/response to the smart card, by means of sending a nonce, together with a reference to the data, signed using the private key of the TC (step 1308). The smart card then verifies and authenticates the secure operator's challenge using the public key of the TC (step 1309), and returns a message (step 1610). If the smart card contains a relevant license, this message will incorporate the nonce, reference to data and user access licence information. The secure operator then checks for appropriate permission within this licence to carry out the data access operation..

If there is no valid permission within the access profile, the secure operator asks the operating system 1400 to notify the end-user appropriately and the data is not operated upon (step 1611).

If there is a valid permission resulting from license checking against the smart card, the secure operator asks the operating system to carry out the data operation (step 1612).

Where the data operation has been allowed, the TC 1103 may be adapted to take a metering record of the transaction and store it in operation log 1204.

In order to counter software piracy, by giving protection against use of copied versions of the data outside the trusted platform, there are several approaches, corresponding to techniques used within dongle technology today. First, the data itself can be transmitted and stored encrypted, with the decryption key stored in the access profile or within the licence stored on the smart card. Secondly, API calls could be inserted into the data, if the source code were available, to check for the TC ID or the smart card ID, or a key stored within the TC or SC, before data access permission is given and/or during the data access operation. Such measures are not necessary if the only aim is to ensure that the data cannot be accessed on trusted platforms in a manner outside the licence agreements with the developer.

In a preferred mechanism for enforcing checks on permission to execute digital data, the trusted module 120 (now considering Figure 14) includes the hardware and/or stores the software used to check permission. In particular, the trusted module 120 acts as a bridge between an application and the operating system (OS) of the computer platform. The OS preferably ignores all requests to load or run applications except those from the trusted module 120, given via a communications path 122 between the trusted module 120 and the CPU 102 of the computer platform that is preferably inaccessible to ordinary applications and non-OS software. The processes operating on the host computer are as follows. First, there is an initial request to the relevant operation protection code in the trusted module 120 to execute an application or other data, usually in response to some action by the end-user. The secure operator within the trusted module 120 will carry out appropriate licence checking, as detailed above. If the result of this checking is that it is appropriate to execute the data, the secure operator will convey this information to the OS via a communications path 122 to the CPU 102, which is preferably inaccessible to ordinary applications and non-OS software. The OS then starts a process on the host to execute the application or data. An analogous process will be carried out when the data protector communicates with the OS to indicate that data installation is appropriate.

Preferably the trusted module is operable to log the request to the operating system to use the data. The security and reliability of metering of data usage is enhanced by securely logging data usage within the trusted module. Logging of data manipulation activity is carried out and recorded securely in the TC. There is the option to carry this out at a number of different stages. The most common would be at the stage at which the data was opened, copied, printed or allowed to run by the secure operator. Another common point would be at the stage at which the data protector has successfully completed its integrity checks on the data to be installed, and has successfully installed this data onto the client machine. Since the access profile, secure operator and data protector are protected by integrity checks, some protection is given against hackers trying to bypass or edit the logging process. Such logs would provide both secure auditing information and the possibility of flexible licensing and payment models. Such audit logs would form the basis for usage reports and information accessible to third parties such as the machine user's IT department or company auditors.

Advantageously, API calls may be used to the trusted module or to the operation protection code to check for information relevant to data restriction, such as the presence of a secret in the trusted module, the identity and presence of the trusted module, or the user ID associated with a portable trusted module. In addition, the trusted module can be made to execute part of the code. Strong authentication of the trusted module is possible by using the trusted module's private cryptographic key, and standard authentication protocols.

There are benefits for the developer in the use of API calls in this way (over, say, using API calls to a conventional dongle). The normal benefit of addition of API calls to the software are that the software is customised for a particular user, and hence not immediately of benefit for another authorised user, even if the executable or source code were obtained in clear. However, in the conventional arrangement, this can require substantial effort on the part of the developer. By the only difference being a different trusted module ID, with protection via integrity-checking of code, substantial protection can be gained with very little effort by the developer, as running part of the code within the trusted module itself does not require individual customisation of code.

In this case the developer can insert API calls into the software to check for the presence of a secret in the platform trusted module (e.g. the user ID in the portable trusted module). Typically, the secure operator would generally only instigate a check at runtime; further API calls within the code can be made at various stages during execution of the code if desired. This could be done in a general way for the software (i.e. each customer will receive the same version), and customised details such as the exact trusted module ID can be added later.

The role of the data protector is to ensure that the data is securely installed (as described with reference to Figure 18) and also to check the integrity of both the data and any associated access profile before relevant operations on the data. There are logical extensions to this role which provide further benefits. The integrity check of the data may be such that the data protector can prevent data without a wrapper from being executed, to give further protection against the data being executed if the wrapper is removed. Optionally, checks are also made by the data protector to ensure that multiple copies of the data are not in existence; this prevents for example unauthorised extension of usage of data protected by licensing models involving a set number of uses, or executing for a given time. If multiple copies are found, the user would be given the option to delete all copies except one, in order to allow execution of this copy.

A key component of the system is the access profile associated with the data. This specifies the data to be protected, and also the operations that the user is allowed to carry out on that particular software or data. In operation of aspects of the present invention, the access profile specifies that a user ID held in the portable trusted module be checked to allow certain (or any) operations on the data. The access profile may also allow the portable trusted module to be checked for a user license (or this may not be allowed for particular data). The access profile may be located within the platform trusted module, or elsewhere on the trusted platform, provided that the integrity of the access profile can be checked by the platform trusted component. The access profile is similar to a license or cryptographic container associated with the data.

There is a variation on this procedure in which the profile is more proactive, and the operating system 1400 contacts the access profile directly to request an operation on data, and the access profile responds with permission only in the case where the operation does not counter the profile specification. Similarly, the user licence on the smart card can initiate the appropriate checks.

In such an arrangement, it is the access profile, rather than the secure operator, which controls the operating system in respect of operations on the data. In this case it is advantageous for the access profile to be located fully or partly within the platform trusted module (preferably with a secure communication path to the operating system). Installation of data onto the computer platform and subsequent execution of data by a user having a portable trusted module will now be described with reference to Figure 22.

Upon registration and/or payment for the data, in step 2201 the clearinghouse or developer (according to the exact payment model) authorises the licence corresponding to a smart card ID (to be stored in due course on a portable trusted module) and data to be updated, according to the data purchased. (Prior to this, there will be mutual authentication (possibly off-line), and public key certificates between these bodies will have been exchanged, or else the developer will actually issue the smart card containing the portable trusted module). The clearinghouse or developer sends the data (step 2202), associated with a (customised) access profile, to the client. The access profile is customised such that the public key of the portable trusted module is inserted into the access profile (alternatively, a shared key is set up between the secure operator and the smart card portable trusted module). Both the data and the access profile are hashed and signed with the clearinghouse/developer's private key, and the public key corresponding to this is stored in the portable trusted module on the smart card. The contents of any message which is to be protected are encrypted using a randomly generated secret key (such as a DES key), and transferred together with the symmetric key which is public key (e.g. RSA)-encrypted using the public key of the intended recipient, according to a standard protocol. If the data is transferred to the computer platform, an analogous process is carried out for transferral of the data, with the public key of the developer being sent to the trusted module of the computer platform.

The data protector checks the integrity of the data whenever this is transferred to the computer platform: upon installation (step 2203), the package is verified by hashing and comparison with the decrypted signature (using the public key in the platform trusted component), and a hash is stored in the platform trusted component. Neither the data, not the access profile, is loaded if the digital signature it bears is not that which is expected.

The preceding steps relate to installation of the data: the following steps relate to use of the system to restrict access to the data. Upon sign-on using the smart card, there is mutual authentication between the platform trusted component and the smart card portable trusted module (step 2204).

The platform trusted component receives and stores the (current) smart card user ID (step 2205).

When the user wishes to use the data, the operating system of the computer platform requires action from the access profile corresponding to that data. The access profile issues a challenge/response to the secure operator (step 2206), by means of sending a random number (nonce), together with a reference to the data.

The secure operator makes an appropriate check on the data, using the smart card ID, or else by obtaining some information stored on the smart card (step 2207). For example, the secure operator may check in the profile stored within the platform trusted component whether the data is licensed to be used according to the user ID of the smart card which has been inserted, or may check whether the data is licensed to be used on the trusted platform itself (regardless of user) according to a profile stored within the platform trusted component, or may consult the smart card to obtain further details of any licence stored therein associated with the data to be accessed. In this case, the secure operator issues a challenge/response to the smart card, by means of sending a nonce, together with a reference to the data, signed using the private key of the platform trusted component. The smart card then verifies and authenticates the secure operator's challenge using the public key of the platform trusted component, and returns a message incorporating the nonce, reference to data and user access licence information. The secure operator then checks for appropriate permission within this licence to carry out the data access operation.

If there is no valid licence, the secure operator returns an error message (step 2208), from which the access profile can determine the exact type of problem with licensing and notify the operating system appropriately. If there is a valid licence, the secure operator returns a message incorporating the nonce and data reference, signed and encrypted using the computer platform trusted component private key.

The access profile verifies if the secure operator's reply is correct using the public key of the computer platform trusted component (step 2209), and either passes the call to the operating system to execute the data or sends an error message to the operating system as appropriate.

The access to the data is logged (step 2210). The log is preferably held within the computer platform trusted component, but could in addition or instead be held in the smart card, and is updated appropriately.

## Claims

1. A computer system adapted to restrict operations on particular data, comprising:
a device comprising a first, portable, trusted module (1106) containing a user identity, wherein a trusted module is a component adapted to behave in an expected manner and resistant to unauthorized external modification;
a computer platform (100) comprising a second trusted module (120; 1103), means (103) for interfacing with the device, and a secure operator (1206);
a data protector (1207) provided on a host that is one of the computer platform (100) and the device, and adapted:
to check the integrity of data to be installed on the host, the data comprising said particular data (1304) and an associated access profile (1303) specifying license permissions of users with respect to the particular data;
to cause the trusted module of the host to store integrity check data (1305) in respect of the data being installed; and
in response to a request to operate on the data, to check the data integrity by reference to the stored integrity check data (1305);
the secure operator (1206) and the access profile (1303) being arranged to cooperate, in response to the request from the operating system (1400) of the computer platform concerning an intended operation on said particular data (1304), to determine whether the intended operation on the particular data is licensed for the user identity contained in the portable trusted module (1103) and prevent the intended operation if a license is required and not present.

2. A computer system as claimed in claim 1, wherein the platform trusted module and the portable trusted module (1106) are adapted for mutual authentication.

3. A computer system as claimed in claim 2, wherein some or all of the functionality of the secure operator (1206) is within the platform trusted module (1103).

4. A computer system as claimed in any preceding claim, wherein the computer platform (100) constitutes the host provided with the data protector (1207) and on which said data is to be installed.

5. A computer system as claimed claim 4, wherein the access profile (1303) is installed in the platform trusted module (120; 1103).

6. A computer system as claimed in any of claims 1 to 3, wherein the device with the portable trusted module (1106) constitutes the host provided with the data protector (1207) and on which said data is to be installed.

7. A computer system as claimed in claim 4 or claim 6, wherein the data protector (1207) is within the relevant trusted module.

8. A computer system as claimed in any preceding claim, wherein the computer platform is adapted at boot to check the integrity of operation protection code comprising the secure operator (1206) and the data protector (1207).

9. A computer system as claimed in claim 8 where dependent on claim 2, wherein the computer platform is adapted to perform the integrity check by reading and hashing the operation protection code to produce a first hash, reading and decrypting a stored signed version of a secure operation protection code hash using a public key certificate of a third party stored in the platform trusted module to produce a second hash, and comparing the first hash and the second hash.

10. A computer system as claimed in any preceding claim, wherein the portable trusted module (1106) contains a user access license specifying access rights to the particular data, whereby unless prevented by the access profile (1303), the secure operator is adapted to check the user access license to determine whether a requested operation is licensed for the user identity contained in the portable trusted module (1106).

11. A computer system as claimed in any preceding claim, wherein the computer platform comprises a secure communication path between the platform trusted module and the operating system of the computer platform.

12. A computer system as claimed in any preceding claim, wherein the computer platform (100) is adapted such that:
the operating system (1400) requests a policy check from the secure operator (1206) before acting upon the particular data (1304), by sending the name of the particular data plus the intended operation;
the secure operator (1206) checks the restrictions associated with the particular data in the access profile (1303), to determine whether the data may be operated upon; and
the secure operator (1206) checks the proposed usage with the restrictions, and replies to the operating system.

13. A computer system as claimed in claim 12 where dependent on claim 3, wherein on request by the operating system (1400) for permission to operate on the particular data (1304), the secure operator (1206) sends a message to the access profile (1303) signed with a private key of the platform trusted module (1103), wherein the access profile has access to the public key of the platform trusted module (1103) and can verify and authenticate the signed message with said public key, whereby if satisfied the access profile (1303) sends access profile data to the secure operator (1206), whereupon the secure operator (1206) checks the access profile data and if appropriate requests the operating system (1400) to carry out the operation requested.

14. A computer system as claimed in claim, wherein the integrity check data comprises the result of a one-way function on the particular data (1304) and associated access profile (1303), and the data protector (1207) is arranged to prevent the operation indicated by the operating system (1400) from being carried out if re-calculation of the one-way function provides a result different from the integrity check data.

15. A computer system as claimed in any preceding claim, wherein upon the secure operator (1206) in cooperation with the access profile (1303) determining that a said intended operation on the particular data (1304) is licensed or that no licence is required, the secure operator or access profile is arranged to request the operating system (1400) to carry out that operation.

16. A computer system as claimed in claim 15, wherein the platform trusted module (1103) is adapted to log requests from the secure operator (1206) or access profile (1303) to the operating system (1400) to carry out said intended operation.

17. A computer system as claimed in claim 1, wherein the operating system (1400) of the computer platform (100) is adapted to request a policy check from the access profile (1303) before carrying out certain operations on the particular data (1304), whereupon the access profile (1303), with the aid of the secure operator (1206), checks restrictions applying to the data to determine whether the data may be operated on, and replies to the operating system accordingly.

18. A computer system as claimed in any of the preceding claims, wherein before execution of a said intended operation on the particular data (1304), the data protector (1207) checks that there are not multiple copies of the data stored within the computer platform (100) and prevents data execution if there are multiple copies.

19. A computer system as claimed in any one of the preceding claims, wherein the computer platform (100) is arranged at boot to measure, and record in the platform trusted module (1103), an integrity metric of the operating system (1400).

## Patentansprüche

1. Ein Computersystem, das dazu angepasst ist, Operationen an bestimmten Daten einzuschränken, wobei das Computersystem folgende Merkmale aufweist:
eine Vorrichtung, die ein erstes, tragbares, vertrauenswürdiges Modul (1106) aufweist, das eine Nutzeridentität enthält, wobei ein vertrauenswürdiges Modul eine Komponente ist, die dazu angepasst ist, sich auf eine erwartete Weise zu verhalten, und die bezüglich einer nicht-autorisierten externen Modifikation resistent ist;
eine Computerplattform (100), die ein zweites vertrauenswürdiges Modul (120; 1103), eine Einrichtung (103) zur Schnittstellenbildung mit der Vorrichtung und einen sicheren Operator (1206) aufweist;
eine Datenschutzeinrichtung (1207), die auf einem Host vorgesehen ist, der entweder die Computerplattform (100) oder die Vorrichtung ist, und die dazu angepasst ist:
die Integrität von Daten, die auf dem Host installiert werden sollen, zu prüfen, wobei die Daten besagte bestimmte Daten (1304) und ein zugeordnetes Zugriffsprofil (1303) aufweisen, das Lizenzgenehmigungen von Nutzern bezüglich der bestimmten Daten spezifiziert;
zu bewirken, dass das vertrauenswürdige Modul des Hosts Integritätsprüfdaten (1305) bezüglich der Daten, die installiert werden, zu speichern; und
ansprechend auf eine Anforderung, die Daten zu bearbeiten, die Datenintegrität durch Bezugnahme auf die gespeicherten Integritätsprüfdaten (1305) zu prüfen;
wobei der sichere Operator (1206) und das Zugriffsprofil (1303) dazu angeordnet sind, ansprechend auf die Anforderung von dem Betriebssystem (1400) der Computerplattform bezüglich einer beabsichtigten Operation an besagten bestimmten Daten (1304) zusammenzuwirken, um zu ermitteln, ob die beabsichtigte Operation an den bestimmten Daten für die in dem tragbaren vertrauenswürdigen Modul (1103) enthaltene Nutzeridentität lizenziert ist, und die beabsichtigte Operation zu verhindern, falls eine Lizenz erforderlich ist und nicht vorliegt.

2. Ein Computersystem gemäß Anspruch 1, bei dem das vertrauenswürdige Plattformmodul und das tragbare vertrauenswürdige Modul (1106) für eine gegenseitige Authentifizierung angepasst sind.

3. Ein Computersystem gemäß Anspruch 2, bei dem ein Teil der oder die gesamte Funktionalität des sicheren Operators (1206) in dem vertrauenswürdigen Plattformmodul (1103) vorliegt.

4. Ein Computersystem gemäß einem der vorhergehenden Ansprüche, bei dem die Computerplattform (100) den Host darstellt, der mit der Datenschutzeinrichtung (1207) versehen ist und auf dem die Daten installiert werden sollen.

5. Ein Computersystem gemäß Anspruch 4, bei dem das Zugriffsprofil (1303) in dem vertrauenswürdigen Plattformmodul (120; 1103) installiert ist.

6. Ein Computersystem gemäß einem der Ansprüche 1 bis 3, bei dem die Vorrichtung mit dem tragbaren vertrauenswürdigen Modul (1106) den Host darstellt, der mit der Datenschutzeinrichtung (1207) versehen ist und auf dem besagte Daten installiert werden sollen.

7. Ein Computersystem gemäß Anspruch 4 oder Anspruch 6, bei dem die Datenschutzeinrichtung (1207) in dem relevanten vertrauenswürdigen Modul vorliegt.

8. Ein Computersystem gemäß einem der vorhergehenden Ansprüche, bei dem die Computerplattform dazu angepasst ist, beim Hochfahren die Integrität eines Operationsschutzcodes, der den sicheren Operator (1206) und die Datenschutzeinrichtung (1207) aufweist, zu prüfen.

9. Ein Computersystem gemäß Anspruch 8 in Rückbeziehung auf Anspruch 2, bei dem die Computerplattform dazu angepasst ist, die Integritätsprüfung durchzuführen, indem sie den Operationsschutzcode liest und einem Hashing unterzieht, um einen ersten Hash zu erzeugen, indem sie eine gespeicherte signierte Version eines sicheren Operationsschutzcodehashs unter Verwendung eines Öffentlicher-Schlüssel-Zertifikats eines in dem vertrauenswürdigen Plattformmodul gespeicherten Dritten liest und verschlüsselt, um einen zweiten Hash zu erzeugen, und indem sie den ersten Hash und den zweiten Hash miteinander vergleicht.

10. Ein Computersystem gemäß einem der vorhergehenden Ansprüche, bei dem das tragbare vertrauenswürdige Modul (1106) eine Nutzerzugriffslizenz enthält, die Zugriffsrechte auf die bestimmten Daten spezifiziert, wodurch, wenn dies nicht durch das Zugriffsprofil (1303) verhindert wird, der sichere Operator dahin gehend angepasst ist, die Nutzerzugriffslizenz zu prüfen, um zu ermitteln, ob eine angeforderter Operation für die in dem tragbaren vertrauenswürdigen Modul (1106) enthaltene Nutzeridentität lizenziert ist.

11. Ein Computersystem gemäß einem der vorhergehenden Ansprüche, bei dem die Computerplattform einen sicheren Kommunikationsweg zwischen dem vertrauenswürdigen Plattformmodul und dem Betriebssystem der Computerplattform aufweist.

12. Ein Computersystem gemäß einem der vorhergehenden Ansprüche, bei dem die Computerplattform (100) derart angepasst ist, dass:
das Betriebssystem (1400) eine Taktikprüfung von dem sicheren Operator (1206) anfordert, bevor es auf die bestimmten Daten (1304) einwirkt, indem es den Namen der bestimmten Daten plus die beabsichtigte Operation sendet;
der sichere Operator (1206) die Einschränkungen, die den bestimmten Daten in dem Zugriffsprofil (1303) zugeordnet sind, prüft, um zu ermitteln, ob die Daten bearbeitet werden können; und
der sichere Operator (1206) die vorgeschlagene Nutzung mit den Einschränkungen prüft und dem Betriebssystem antwortet.

13. Ein Computersystem gemäß Anspruch 12 in Rückbeziehung auf Anspruch 3, bei dem der sichere Operator (1206) auf eine Anforderung seitens des Betriebssystems (1400) bezüglich einer Genehmigung, die bestimmten Daten (1304) zu bearbeiten, eine Nachricht an das Zugriffprofil (1303) sendet, die mit einem privaten Schlüssel des vertrauenswürdigen Plattformmoduls (1103) signiert ist, wobei das Zugriffsprofil einen Zugriff auf den öffentlichen Schlüssel des vertrauenswürdigen Plattformmoduls (1103) hat und die signierte Nachricht mit dem öffentlichen Schlüssel verifizieren und authentifizieren kann, wodurch, wenn es zufrieden gestellt ist, das Zugriffsprofil (1303) Zugriffsprofildaten an den sicheren Operator (1206) sendet, woraufhin der sichere Operator (1206) die Zugriffsprofildaten prüft und, falls dies angemessen ist, das Betriebssystem (1400) auffordert, die angeforderte Operation durchzuführen.

14. Ein Computersystem gemäß Anspruch, bei dem die Integritätsprüfdaten das Ergebnis einer Einwegfunktion an den bestimmten Daten (1304) und ein zugeordnetes Zugriffsprofil (1303) aufweisen und die Datenschutzeinrichtung (1207) dazu angeordnet ist, zu verhindern, dass die durch das Betriebssystem (1400) angegebene Operation durchgeführt wird, falls eine Neuberechnung der Einwegfunktion ein Ergebnis liefert, dass sich von den Integritätsprüfdaten unterscheidet.

15. Ein Computersystem gemäß einem der vorhergehenden Ansprüche, bei dem, nachdem der sichere Operator (1206) bei einer Zusammenarbeit mit dem Zugriffsprofil (1303) bestimmt hat, dass eine besagte beabsichtigte Operation an den bestimmten Daten (1304) lizenziert ist oder dass keine Lizenz erforderlich ist, der sichere Operator oder das Zugriffsprofil dahin gehend angeordnet ist, das Betriebssystem (1400) aufzufordern, diese Operation durchzuführen.

16. Ein Computersystem gemäß Anspruch 15, bei dem das vertrauenswürdige Plattformmodul (1103) dazu angepasst ist, Anforderungen von dem sicheren Operator (1206) oder dem Zugriffsprofil (1303) an das Betriebssystem (1400) zu protokollieren, um die beabsichtigte Operation auszuführen.

17. Ein Computersystem gemäß Anspruch 1, bei dem das Betriebssystem (1400) der Computerplattform (100) dazu angepasst ist, eine Taktikprüfung von dem Zugriffsprofil (1303) anzufordern, bevor sie gewisse Operationen an den bestimmten Daten (1304) ausführt, woraufhin das Zugriffsprofil (1303) mit Hilfe des sicheren Operators (1206) Einschränkungen prüft, die für die Daten gelten, um zu ermitteln, ob die Daten bearbeitet werden können, und dem Betriebssystem entsprechend antwortet.

18. Ein Computersystem gemäß einem der vorhergehenden Ansprüche, bei dem vor der Ausführung einer besagten beabsichtigten Operation an den bestimmten Daten (1304) die Datenschutzeinrichtung (1207) prüft, dass nicht Mehrfach-Kopien der in der Computerplattform (100) gespeicherten Daten vorliegen, und eine Datenausführung verhindert, falls Mehrfach-Kopien vorliegen.

19. Ein Computersystem gemäß einem der vorhergehenden Ansprüche, bei dem die Computerplattform (100) dazu angeordnet ist, beim Hochfahren eine Integritätsmetrik des Betriebssystems (1400) zu messen und in dem vertrauenswürdigen Plattformmodul (1103) aufzuzeichnen.

## Revendications

1. Système informatique adapté de façon à limiter des opérations sur des données particulières, comprenant :
un dispositif qui comprend un premier module de confiance portable (1106) qui contient une identité d'utilisateur,
dans lequel un module de confiance est un composant adapté de façon à se comporter d'une façon attendue et qui résiste à une modification extérieure non autorisée ;
une plateforme informatique (100) qui comprend un second module de confiance (120 ; 1103), des moyens (103) destinés à s'interfacer au dispositif et un opérateur sûr (1206) ;
un dispositif de protection de données (1207) disposé sur un hôte qui est l'un parmi la plateforme informatique (100) et le dispositif, et adapté de façon à :
- vérifier l'intégrité des données à installer sur l'hôte, les données comprenant lesdites données particulières (1304) et un profil d'accès associé (1303) spécifiant des permissions d'autorisation des utilisateurs en ce qui concerne les données particulières ;
- provoquer le stockage par le module de confiance de l'hôte des données de vérification d'intégrité (1305) en ce qui concerne les données installées ; et
- en réponse à une demande d'opération sur les données, vérifier l'intégrité des données en se référant aux données de vérification d'intégrité (1305) stockées ;
l'opérateur sûr (1206) et le profil d'accès (1303) étant agencés de façon à coopérer, en réponse à la demande en provenance du système d'exploitation (1400) de la plateforme informatique en ce qui concerne une opération prévue sur lesdites données particulières (1304), de façon à déterminer si l'opération prévue sur les données particulières est autorisée pour l'identité d'utilisateur contenue dans le module de confiance portable (1103) et à empêcher l'opération prévue si une autorisation est requise et n'est pas présente.

2. Système informatique selon la revendication 1, dans lequel le module de confiance de la plate-forme et le module de confiance portable (1106) sont adaptés pour une authentification mutuelle.

3. Système informatique selon la revendication 2, dans lequel une partie ou la totalité de la fonctionnalité de l'opérateur sûr (1206) se situe à l'intérieur du module de confiance de la plate-forme (1103).

4. Système informatique selon l'une quelconque des revendications précédentes, dans lequel la plateforme informatique (100) constitue l'hôte doté du dispositif de protection de données (1207) et sur lequel lesdites données doivent être installées.

5. Système informatique selon la revendication 4, dans lequel le profil d'accès (1303) est installé dans le module de confiance de la plate-forme (120 ; 1103).

6. Système informatique selon l'une quelconque des revendications 1 à 3, dans lequel le dispositif avec le module de confiance portable (1106) constitue l'hôte doté du dispositif de protection de données (1207) et sur lequel lesdites données doivent être installées.

7. Système informatique selon la revendication 4 ou la revendication 6, dans lequel le dispositif de protection de données (1207) se situe à l'intérieur du module de confiance approprié.

8. Système informatique selon l'une quelconque des revendications précédentes, dans lequel la plateforme informatique est adaptée, à l'amorce, de façon à vérifier l'intégrité du code de protection d'opération comprenant l'opérateur sûr (1206) et le dispositif de protection de données (1207).

9. Système informatique selon la revendication 8 si elle dépend de la revendication 2, dans lequel la plateforme informatique est adaptée de façon à exécuter la vérification d'intégrité en lisant et en hachant le code de protection d'opération de façon à produire un premier hachage, en lisant et en déchiffrant une version signée stockée d'un hachage de code de protection d'opération sûr en utilisant un certificat de clé publique d'un tiers stocké dans le module de confiance de la plate-forme de façon à produire un second hachage et en comparant le premier hachage et le second hachage.

10. Système informatique selon l'une quelconque des revendications précédentes, dans lequel le module de confiance portable (1106) contient une autorisation d'accès d'utilisateur qui spécifie des droits d'accès aux données particulières, grâce à quoi, à moins que le profil d'accès (1303) ne l'empêche, l'opérateur sûr est adapté de façon à vérifier l'autorisation d'accès d'utilisateur de façon à déterminer si une opération demandée est autorisée pour l'identité d'utilisateur contenue dans le module de confiance portable (1106).

11. Système informatique selon l'une quelconque des revendications précédentes, dans lequel la plateforme informatique comprend un chemin de communication sûr entre le module de confiance de la plate-forme et le système d'exploitation de la plateforme informatique.

12. Système informatique selon l'une quelconque des revendications précédentes, dans lequel la plateforme informatique (100) est adaptée de telle sorte que :
le système d'exploitation (1400) demande une vérification de politique de la part de l'opérateur sûr (1206) avant d'agir sur les données particulières (1304), en envoyant le nom des données particulières plus l'opération prévue ;
l'opérateur sûr (1206) vérifie les restrictions associées aux données particulières dans le profil d'accès (1303), de façon à déterminer s'il est possible d'exécuter une opération sur les données ; et
l'opérateur sûr (1206) vérifie l'utilisation proposée avec les restrictions et répond au système d'exploitation.

13. Système informatique selon la revendication 12 si elle dépend de la revendication 3, dans lequel lors d'une demande d'une permission, de la part du système d'exploitation (1400), d'exécuter une opération sur les données particulières (1304), l'opérateur sûr (1206) envoie un message au profil d'accès (1303) signé avec une clé privée du module de confiance de la plate-forme (1103), dans lequel le profil d'accès a accès à la clé publique du module de confiance de la plate-forme (1103) et peut vérifier et authentifier le message signé avec ladite clé publique, grâce à quoi, s'il est satisfait, le profil d'accès (1303) envoie des données de profil d'accès à l'opérateur sûr (1206), à la suite de quoi l'opérateur sûr (1206) vérifie les données de profil d'accès et, dans le cas d'une concordance, il invite le système d'exploitation (1400) à exécuter l'opération demandée.

14. Système informatique selon la revendication, dans lequel les données de vérification d'intégrité comprennent le résultat d'une fonction unidirectionnelle sur les données particulières (1304) et le profil d'accès associé (1303), et le dispositif de protection de données (1207) est agencé de façon à empêcher l'exécution de l'opération indiquée par le système d'exploitation (1400) si un nouveau calcul de la fonction unidirectionnelle fournit un résultat différent des données de vérification d'intégrité.

15. Système informatique selon l'une quelconque des revendications précédentes, dans lequel lorsque l'opérateur sûr (1206) en coopération avec le profil d'accès (1303) détermine qu'une dite opération prévue sur les données particulières (1304) est autorisée ou qu'aucune autorisation n'est requise, l'opérateur sûr ou le profil d'accès est agencé de façon à demander au système d'exploitation (1400) d'exécuter cette opération.

16. Système informatique selon la revendication 15, dans lequel le module de confiance de la plate-forme (1103) est adapté de façon à enregistrer les demandes, en provenance de l'opérateur sûr (1206) ou du profil d'accès (1303), transmises au système d'exploitation (1400) visant à exécuter ladite opération prévue.

17. Système informatique selon la revendication 1, dans lequel le système d'exploitation (1400) de la plateforme informatique (100) est adapté de façon à demander une vérification de politique de la part du profil d'accès (1303) avant d'exécuter certaines opérations sur les données particulières (1304), à la suite de quoi le profil d'accès (1303), avec l'aide de l'opérateur sûr (1206), vérifie les restrictions qui s'appliquent aux données de façon à déterminer s'il est possible d'exécuter une opération sur les données et répond en conséquence au système d'exploitation.

18. Système informatique selon l'une quelconque des revendications précédentes, dans lequel, avant l'exécution d'une dite opération prévue sur les données particulières (1304), le dispositif de protection de données (1207) vérifie qu'il n'y a pas de multiples copies des données stockées à l'intérieur de la plateforme informatique (100) et empêche l'exécution des données s'il y a de multiples copies.

19. Système informatique selon l'une quelconque des revendications précédentes, dans lequel la plateforme informatique (100) est agencée, à l'amorce, de façon à mesurer et à enregistrer dans le module de confiance de la plate-forme (1103) une métrique d'intégrité du système d'exploitation (1400).
